# EUROPÄISCHE PATENTANMELDUNG

(11) **EP 2 088 386 A2**
(43) Veröffentlichungstag der Anmeldung: **12.08.2009**
(21) Anmeldenummer: 09001904.3
(22) Anmeldetag: 11.02.2009
(51) Int. Cl.: F24J 2/52, F24J 2/04

(54) **Leicht handhabbares Gestell für Dachaufbauten an Flachdächern und geneigten Flachdächern**

(30) Priorität: 11.02.2008 DE 102008008923
(71) Anmelder: Klein, Andreas, 45966 Gladbeck (DE)
(72) Erfinder: Klein, Andreas, 45966 Gladbeck (DE)
(74) Vertreter: Gehrke, Peter P.

(57) **Zusammenfassung**

Leicht handhabbares Gestell zur Kopplung von Dachaufbauten, insbesondere von Sonnenkollektoren, an oder auf Dächern, vorzugsweise Flachdächern, oder solchen z.B. 15° Neigung, mit welchem sich die Lage der Dachaufbauten gegenüber Dacheindeckungselementen verstellen und festlegen lässt, welches umfasst ein Stützrohr (1), welches mit einem Ende (1e) mittels einer Verbindungseinrichtung (2) an eine Grundplatte (3) gekoppelt ist, das andere Ende (1a) des Stützrohrs (1) mittels einer Gelenkeinrichtung (27) an eine an Dachaufbauten koppelbare Lochplatte (41) zur Einstellung der Neigung der Lochplatte (41) zu dem Stützrohr (1) gekoppelt ist, eine Manschette (9), welche zumindest einen Teil des Stützrohrs (1) aufnimmt, eine eine Lochung (7a) aufweisende Dämmstoffhülse (7), welche zumindest einen Teil des Stützrohrs (1) und der Manschette (9) aufnimmt, die Lochplatte zur Kopplung an Dachaufbauten vorgesehen ist und die Grundplatte (3) zur Kopplung, wie Verschraubung, an ein Tragelement (8), vorzugsweise an einen als T-Stück ausgebildeten Binder, geeignet ist.

## Beschreibung

Die Erfindung betrifft eine leicht handhabbares Gestell für Dachaufbauten, insbesondere Sonnenkollektoren, Solarmodulen, Solarzellen, Photovoltaikkollektoren, oder dergleichen, mit welcher sich die Lage der Dachaufbauten gegenüber Dacheindeckungselementen verstellen und festlegen lässt, und welches auf unterschiedlichste Dachtragkonstruktionen koppelbar ist.

Für die Montage von Dachaufbauten oder andere auf Dächern oder am Boden zu installierender Gerätschaften gibt es eine Vielzahl unterschiedlicher Vorrichtungen. Bekannt sind beispielsweise wannenförmige Konsolen für auf einem Gerüst aufgebrachte Solarzellen, welche mittels herkömmlicher Krallen oder Befestigungsplatten an Dächer befestigt werden. Diese Vorrichtungen sind unhandlich, schwer und ermöglichen keine dauerhafte Einstellung und Festlegung des Aufstellwinkels der Dachaufbauten relativ zur Neigung der Dächer. Herkömmliche Flachdachgestelle umfassen beispielsweise im Abstand zueinander angeordnete Einzelstützen, welche mittels Trägern verbunden sind. Die Träger nehmen die Dachaufbauten auf, beispielsweise Solarmodule. Es zeigt sich jedoch, dass die herkömmlichen Flachdachgestelle die Verschattung einzelner Solarmodule aufgrund mangelnder Justierung der Einzelstützen nicht verhindern können. Durch die Verschattung werden der Gewinn an Sonnenwärme und die Ausbeute an elektrischem Strom verhindert, zumindest eingeschränkt.

Hinzukommend erweisen sich herkömmliche Flachdachgestelle aufgrund mangelnder Variabilität derselben als ungeeignet, auf leicht geneigten Flachdächern aufgestellt und an diesen gekoppelt zu werden. Daher ist es erforderlich, je nach der Flachdachneigung und der Dachgeometrie unterschiedlichste Gestelle für die Montage der Dachaufbauten bereitzustellen. Die unterschiedlichen Dachgeometrien machten es ebenso erforderlich, die herkömmlichen Gestelle für Dachaufbauten vor Ort zusammenzubauen, so dass eine Vormontierung entfällt.

Hinzutretend erweisen sich die herkömmlichen Gestelle, beispielsweise für Flachdächer oder für sonstige Dachformen als ungeeignet, hohen Windlasten, welche bei widrigen Wetterverhältnissen über die Dachaufbauten auf die Gestelle einzuwirken vermögen, hinreichend zu widerstehen, so dass Brüche und Risse in den herkömmlichen Gestellen auftreten. Zudem ermöglichen die herkömmlichen Gestelle aufgrund der Sog- und Druckwirkung bei Sturm und Regen, keine hinreichende Lagestabilität der Dachaufbauten, so dass die Veränderung der Lage der Dachaufbauten eine Justierung der Dachaufbauten durch den kostspieligen Ersatz von Teilen der herkömmlichen Gestelle erforderlich macht.

Aufgabe der Erfindung soll es sein, ein leicht handhabbares Gestell bereitzustellen, welche an unterschiedlichste Dachgeometrien vor Ort anpassbar ist.

Das bereitzustellende Gestell soll für die Montage von Dachaufbauten an Flachdächern, geneigten Flachdächern oder sonstigen Dachformen, geeignet sein.

Hinzutretend soll das bereitzustellende Gestell ohne Gerüststellung an Fachdächern und geneigten Dächern anbringbar sein.

Hinzukommend soll das bereitzustellende Gestell kein Sicherheitsgerüst von innen erforderlich machen.

Zudem soll das bereitzustellende Gestell vormontierbar im industriellen Maßstab als Module herstellbar sein, um die Herstellungskosten zu senken.

Ebenfalls soll das bereitzustellende Gestell an Tragelementen verschiedenster Ausgestaltungen, wie sie in Flach- und geneigten Dächern zu finden sind, koppelbar sein.

Ebenso soll das bereitzustellende Gestell in automatisierten Arbeitsschritten rascher als herkömmliche erstellbar sein, um die Montagedauer merklich zu verkürzen.

Gleichfalls soll das bereitzustellende Gestell durch gleichbleibende Qualität trotz geringer Herstellungs- und Montagedauer sich auszeichnen.

Ebenso soll das bereitzustellende Gestell die Sog- und Druckwirkung von Wänden breitflächig auf das Dach und auf dessen Tragelemente ableiten können, ohne dass eine Instabilität des Gestells, ein Bruch oder ein Riss im Gestell sich zeigen.

Gleichfalls soll das bereitzustellende Gestell eine dauerhafte Lage der Dachaufbauten ermöglichen, unabhängig von den durch Windlasten einwirkenden Kräften.

Hinzutretend soll auch das bereitzustellende Gestell eine Neujustierung oder Feinjustierung von Solarmodulen bei Einbau wie auch nachträglich ermöglichen, ohne dass diese Tätigkeit zeit- und arbeitsaufwendig ist.

Hinzukommend soll das bereitzustellende Gestell bereits weitgehend kostengünstig vormontiert sein, so dass sich im Vergleich zu herkömmlichen Gestellen die Montage der Dachaufbauten an Dächern erheblich verkürzt werden.

Auch soll das bereitzustellende Gestell geringere Anforderungen an die Geschicklichkeit der Benutzer aufgrund des Zusammenbaus vormontierter Teile vor Ort.

Schließlich soll auch die Montage des bereitzustellenden Gestells an Dächern möglichst wenig Abfall verursachen und keine umständliche Gerüststellung und Bereitstellung von Sicherheitsgerüsten erforderlich machen.

Die Erfindung wird gelöst durch den Hauptanspruch und den Nebenanspruch. Die Unteransprüche betreffen bevorzugte Ausgestaltungen und Weiterentwicklungen der Erfindung.

Die Erfindung betrifft ein leicht handhabbares Gestell zur Kopplung von Dachaufbauten, insbesondere von Sonnenkollektoren, an oder auf Dächern, vorzugsweise Flachdächern, mit welchem sich die Lage der Dachaufbauten gegenüber Dacheindeckungselementen verstellen und festlegen lässt, welches dadurch gekennzeichnet ist, dass ein Stützrohr mit seinem einen Ende mittels einer Verbindungseinrichtung an eine Grundplatte gekoppelt ist, das andere Ende des Stützrohrs mittels einer Gelenkeinrichtung an eine an Dachaufbauten koppelbare Lochplatte zur Einstellung der Neigung der Lochplatte zu dem Stützrohr gekoppelt ist, eine Manschette zumindest einen Teil des Stützrohrs aufnimmt, eine eine Lochung aufweisende Dämmstoffhülse zumindest einen Teil des Stützrohrs und der Manschette aufnimmt, die Lochplatte zur Kopplung an Dachaufbauten vorgesehen ist und die Grundplatte zur Kopplung an ein Tragelement geeignet ist.

Ein weiterer Gegenstand der Erfindung ist auf ein Verfahren zur Bereitstellung eines leicht handhabbaren Gestells zur Kopplung von Dachaufbauten, in, an oder auf Dächern, vorzugsweise Flachdächern, gerichtet, welches dadurch gekennzeichnet ist, dass
a. mittels zwei einander gekoppelter Lochsägen mit ringförmigen Sägeblättern unterschiedlichen Durchmessers ein Durchbruch mit einem Durchmesser A aus einer eine Dämmstoffschicht und einer Dachabdichtungsschicht, vorzugsweise einer Dampfsperre, umfassenden Dachschicht eines Dachs zur Bereitstellung einer inneren Lochsägenfüllung und ein Durchbruch mit einem Durchmesser B, welcher Durchmesser B größer als der Durchmesser A ist, aus der die Dämmstoffschicht und die Dachabdichtungsschicht umfassenden Dachschicht des Dachs zur Bereitstellung einer äußeren Lochsägenfüllung ausgefräst und diese entnommen werden,
b. anschließend mittels einer Lochsäge mit einem Sägeblatt ein Durchbruch mit einem Durchmesser C, welcher Durchmesser C größer als der Durchmesser A und kleiner als der Durchmesser B ist, aus der Dampfsperre und einer auf einem Tragelement ruhenden Trageinrichtung, z.B. einem Trapezblech, ausgefräst wird,
c. eine Grundplatte mit dem Tragelement des Dachs mit Hilfe von Schraubverbindungen als Verbindungsvorrichtungen verbunden wird,
d. das eine Ende des Stützrohrs mit der Grundplatte mit Hilfe einer Verbindungseinrichtung verbunden wird,
e. vorzugsweise über das Stützrohr eine Glattblech-Manschette mit ihrer Öffnung geführt und die Glattblech-Manschette mit der auf dem Tragelement ruhenden Trageinrichtung, z.B. dem Trapezblech, mittels Verbindungsvorrichtungen verbunden wird, vorzugsweise die Glattblech-Manschette mit der Dampfsperre mittels Verbindungsvorrichtungen, z.B. Klebebändern, wie herkömmlicher Buytl-Dichtbändern, wasserdicht und dauerhaft verbunden wird, wobei die Glattblech-Manschette einen Durchmesser D hat, der größer als der Durchmesser C ist,
f. über das Stützrohr eine Manschette-Dampfsperrfolie mit ihrer Öffnung geführt wird, welche Manschette-Dampfsperrfolie einen Durchmesser B hat, der vorzugsweise mit dem Durchmesser B der äußeren Lochsägenfüllung übereinstimmt oder größer als derselben ist, welche Manschette-Dampfsperrfolie mit ihrem äußeren Randbereich mit der Dampfsperre und mit ihrem inneren Randbereich mit dem Stützrohr wasserdicht und dauerhaft verbunden wird und
g. über das Stützrohr die äußere Lochsägenfüllung geführt und auf die Manschette-Dampfsperrfolie aufgelegt, vorzugsweise verbunden, wird.

Unter Dächern kann im Sinne der Erfindung auch verstanden werden, Flachdächer, leicht geneigte Flachdächer mit einem geringen Neigungswinkel von wenigen Grad, belüftete Flachdächer, unbelüftete Flachdächer, geneigte Kaltdächer, sonstige Dachformen, wie Satteldach, Walmdach, Zeltdach, Krüppelwalmdach und / oder Mansardendach des belüfteten und unbelüfteten Typs, welche ein Dachtragwerk und eine Dachschicht umfassen können.

Unter Dachaufbauten kann im Sinne der Erfindung auch verstanden werden Solarkollektoren zur Gewinnung von Sonnenwärmeenergie, Solarzellen, -module, Photovoltaikmodule, zur Gewinnung von elektrischem Strom oder dergleichen, und sonstige auf Dächern zu installierender Gerätschaften, wie Antennen, Empfangsanlagen, oder dergleichen.

Das Dachtragwerk kann z.B. die Dachschicht oder Dachhaut tragen und die Lasten auf das Bauwerk oder Gebäude übertragen. Das Dachtragwerk z.B. der Flachdächer, leicht geneigten Flachdächer mit einem geringen Neigungswinkel von wenigen Grad, belüfteten Flachdächer, unbelüfteten Flachdächer, geneigten Kaltdächer, sonstigen Dachformen, usw. kann Tragelemente umfassen.

Unter Tragelement kann im Sinne der Erfindung auch verstanden werden z.B. Sparren, Spannriegel, Streben, Dachbalken von Dächern des belüfteten und des unbelüfteten Typs, Glattbleche, Konterlattung von Dächern des belüfteten und unbelüfteten Typs, Sparren von Flachdächern des belüfteten und unbelüfteten Typs, Binder und / oder T-Träger von Flachdächern, beispielsweise von Trapezblechdächern, Stahlbetonträger, oder sonstigen herkömmlichen Dachkonstruktionen. Das Tragelement dann das Dachtragwerk und / oder die Dachschicht stützen oder tragen.

Unter Trapezblech kann im Sinne der Erfindung auch verstanden werden eine auf dem Tragelement ruhende Trageinrichtung, welche z.B. die Dachschicht eines Flachdachs oder sonstigen Dachs oder Dachtragwerks, Dachbalken, oder dergleichen tragen oder stützen kann.

Unter Verbindungsvorrichtung kann im Sinne der Erfindung auch verstanden werden eine herkömmliche Schraubenverbindung, wie Langschrauben, Schraubensicherungen, Bolzenverbindung, Spannschraubenverbindung, Klammerverbindung, Krallverbindung, solche vorzugsweise mit formschlüssigen, kraft-, und / oder reibschlüssigen Sicherungen, Schrauben des selbsthemmenden Typs, Nietverbindung und / eine Klebverbindung. Unter Verbindungseinrichtung wird im Sinne der Erfindung auch verstanden eine herkömmliche Schraubenverbindung, wie Langschrauben, Schraubensicherungen, Schraubverbindung, Bolzenverbindung, Spannschraubenverbindung, Klammerverbindung, Krallverbindung, solche vorzugsweise mit formschlüssigen, kraft-, und / oder reibschlüssigen Sicherungen, Schrauben des selbsthemmenden Typs, Nietverbindung und / eine Klebverbindung.

Unter wasserdichter und dauerhafter Verbindung kann im Sinne der Erfindung auch verstanden werden, die Verklebung, z.B. mittels Klebebändern, wie Butyl-Dichtbändern, die Verschweißung, die Vulkanisierung, usw.

Unter Dämmstoffschicht kann im Sinne der Erfindung auch verstanden werden eine herkömmliche Dämmschicht eines Dachs mit oder ohne Dampfsperre, Dachbahn, oder dergleichen.

Unter Dachschicht eines Dachs kann im Sinne der Erfindung auch verstanden werden z.B. die Dämmstoffschicht mit Dachhaut und Trennschicht, Dachbalken, Dachschalung, Dachabdichtungsschicht und / oder Dampfsperre, usw. ggf. sowie Dachschalung verstanden. Die Dachschicht umfasst insbesondere die Dacheindeckungselemente.

Unter Dachabdichtungsschicht kann im Sinne der Erfindung auch verstanden werden die Unterspannbahnen, Bahnen zur Abdichtung gegenüber Feuchtigkeit, Winddruck, Windsog, die ein- oder mehrlagig sein können.

Unter Dacheindeckungselement kann im Sinne der Erfindung auch verstanden werden die Dachhaut, bei Dächern beispielsweise Dachpfannen, Dachziegel, bei Flachdächern beispielsweise eine wasserundurchlässige Schicht zur Abdichtung und als Oberflächenschutz.

Unter Auflager kann im Sinne der Erfindung auch verstanden werden ein Stützkörper oder eine Fläche zum Tragen oder Stützen eines Bauteils, z.B. von Dachaufbauten.

Das erfindungsgemäße leicht handhabbares Gestell eignet sich zur Kopplung von Dachaufbauten, insbesondere von Sonnenkollektoren, an, in und / oder auf Dächern oder an, in oder auf Dachtragwerken derselben, vorzugsweise Flachdächern, oder solchen mit Neigung, z.B. 15⁰ Neigung, mit welchem sich die Lage der Dachaufbauten gegenüber Dacheindeckungselementen, einem Stützrohr des erfindungsgemäßen Gestells und / oder einem Tragelement verstellen und festlegen lässt, wobei ein Stützrohr mit seinem einen Ende mittels einer Verbindungseinrichtung an eine Grundplatte gekoppelt ist, das andere Ende des Stützrohrs mittels einer Gelenkeinrichtung an eine an Dachaufbauten koppelbare Lochplatte zur Einstellung der Neigung der Lochplatte zu dem Stützrohr gekoppelt ist, eine Manschette zumindest einen Teil des Stützrohrs aufnimmt, eine eine Lochung aufweisende Dämmstoffhülse zumindest einen Teil des Stützrohrs, und z.B. der Manschette, aufnimmt, die Lochplatte zur Kopplung an Dachaufbauten vorgesehen ist und die Grundplatte zur Kopplung, wie Verschraubung, an ein Tragelement, vorzugsweise an einen als T-Stück ausgebildeten Binder, geeignet ist.

Der Vorteil des erfindungsgemäßen Gestells ist unter Anderem, dass durch das Zusammenspiel der das erfindungsgemäße Gestell bereitstellenden Teile die Position der an dem erfindungsgemäßen Gestell koppelbaren Dachaufbauten stufenlos verändert, die Dachaufbauten beliebig je nach Erfordernis des Dachs und je nach Wunsch des Benutzers ausgerichtet, die geforderte Ausrichtung festgelegt, z.B. dauerhaft und ohne Veränderung der Lage arretiert, die Lage der Dachaufbauten -je nach Erfordernis und je nach Wunsch des Benutzers jedoch ebenso nachträglich neu ausgerichtet werden können.

Das erfindungsgemäße Gestell für z.B. Dachaufbauten eignet sich insbesondere zur Montage in, an oder auf Flachdächern und geringfügig geneigten Fachdächern. Flachdächer können eine zwischen Dachbalken angeordnete Wärmedämmstoffschicht und eine unter der Dämmstoffschicht angebrachte Dampfsperre aufweisen. Zusätzlich kann auf der Wärmedämmschicht eine Dachschalung mit Kanthölzern aufgebracht sein. Die Dachbalken können auf sogenannten Trapezblechen ruhen, beispielsweise bei herkömmlichen Trapezblechdächern, welche von Tragelementen abgestützt werden können. Die Trapezbleche können im Folgenden als Trageinrichtung bezeichnet werden.

Der Aufbau sonstiger Dächer kann eine Dämmschicht mit einer unter der Dämmschicht angeordneten Dampfsperre umfassen, wobei die Dämmschicht zwischen den Sparren angeordnet ist. Auf der Dämmstoffschicht befindet sich z.B. eine Dachbahn und eine Konterlattung zur Aufnahme der Dachhaut als Dacheindeckungselement, welche bei Dächern beispielsweise eine Dachpfannen oder bei Flachdächern beispielsweise eine wasserundurchlässige Schicht zur Abdichtung und als Oberflächenschutz umfasst.

Das erfindungsgemäße Gestell kann in Arbeitsstellung das Stützrohr, die Lochplatte, die Grundplatte, die Dämmstoffhülse mit oder ohne die Manschette, ggf. eine Zusatzmanschette, eine Glattblech-Manschette, die Manschette-Dampfsperrfolie, umfassen. Unter Arbeitsstellung wird im Sinne der Erfindung auch verstanden, das bereitgestellte erfindungsgemäße Gestell, welches an, in oder auf einem Dach oder in , an oder auf dessen Dachtragwerk gekoppelt ist.

Das erfindungsgemäße Gestell umfasst ein Stützrohr. Das Stützrohr ist zum Beispiel ein Rundrohr, Vierkantrohr oder Vielfachkantrohr. Das Stützrohr kann teleskopartig in seiner Länge einstellbar sein und / oder mehrere miteinander einsteckbare und / verschraubbare Stützrohrteile umfassen, um die Anpassbarkeit des erfindungsgemäßen Gestells zu erhöhen. Das Stützrohr wird im Fall des Aufbringens der Dämmstoffhülse auf das Stützrohr durch die mittige Lochung oder Öffnung der Dämmstoffhülse und durch deren mittigen Hülsenkanal und durch die Öffnung der Manschette hindurchgeführt,

An dem einen Ende des Stützrohres ist eine Grundplatte mit Hilfe von Verbindungseinrichtungen gekoppelt. So kann das eine Ende des Stützrohrs mittels einer Schraubverbindung als Verbindungseinrichtung mit der Grundplatte verbunden sein. Die Verbindungseinrichtung kann als Schraubverbindung ausgestaltet sein, wobei auf der Oberseite der Grundplatte ein kreisförmig aufrecht stehender ausgebildeter Kragen angeformt ist. Ebenso kann das Stützrohr mit den herkömmlichen Verbindungsvorrichtungen mit der Grundplatte verbunden sein. Der Kragen kann kreisförmig sein. Der Kragen kann ein Außengewinde aufweisen und das eine Ende des Stützrohrs kann ein Innengewinde zum Zusammenwirken mit dem Außengewinde des Kragens haben. Ebenso ist die Ausbildung des Kragens mit einem Innengewinde und die des einen Endes des Stützrohrs mit einem Außengewinde zum Zusammenwirken mit dem Innengewinde des Kragens möglich. Der Kragen hat eine ausreichenden Gewindehöhe, um die anfallenden Lasten auf die Tragelementen als Unterkonstruktion weiterleiten zu können. Das Ausmaß des Ein- oder Aufschraubens des Stützrohrs in oder auf den Kragen kann durch auf dem Stützrohr aufgetragene Maßangaben, wie Mindesteinschub, Sicherheitsbereich, Maximalbereich, für den Benutzer vorgegeben sein. Vorteilhafterweise wird der Kragen mit einem Innen - oder Außengewinde auf der Oberseite der Grundplatte , z.B. außermittig auf der Grundplatte, aufgeschweißt. Die dauerhafte Arretierung kann mittels in in Kragen und einem Ende ausgefrästen Gewindelöchern einführbare Sicherungsschrauben erfolgen.

Die Grundplatte, die Zusatzmanschette, die Glattblech-Manschette und / oder die Lochplatte können zum Beispiel als platten- oder scheibenförmig ausgeformt sein, in der Draufsicht kreisbogenförmig oder eckig, wie vieleckig, zum Beispiel achteckig, mit oder ohne abgekanteten oder abgerundeten Ecken, mit oder ohne Vorsatzarmen zur Aufnahme der Krallen, usw. ausgebildet sein. Die Grundplatte kann vorgebohrte Löcher und / oder halbmondförmige Langlöcher für die Montage auf Tragelementen, wie Stahlbetonträgern, mit z.B. Halfenschienen, welche im Querschnitt von U-förmigem Profil mit nach innen ragenden Enden ausgestaltet sein können, und / oder eine umlaufende Aufkantung zur Aufnahme der Klammern aufweisen.
Die Grundplatte ist zur Kopplung an ein Tragelement geeignet, worunter im Sinne der Erfindung auch die lösbare und / oder unlösbare Verbindung der Grundplatte mittels der Verbindungsvorrichtung und ggf. Abstandshalter an dem Tragelement zu verstehen sein kann.

Die Grundplatte kann mit dem Tragelement mit an ihrem Außenrand angeordneten Verbindungsvorrichtungen verbunden werden. Die Grundplatte kann mittels Abstandshaltern und / oder Verbindungsvorrichtungen an das Tragelement gekoppelt sein, wobei die Abstandshalter zur Einstellung der Beabstandung von dem Tragelement und der Ausrichtung, wie der lotrechten, der Grundplatte mit dem Stützrohr zu dem Tragelement vorgesehen sind. Als Abstandshalten können in Gewindelöcher der Grundplatte eindrehbare Schrauben dienen. Die Grundplatte kann zur Kopplung mit dem Tragelement auch mittels seitlich angeordneter Verbindungsvorrichtungen, wie Krallen und Spannschrauben, verbunden sein; besonders eignen sich Krallen, welche mittels Scharniere an der Grundplatte beweglich, wie schwenkbar, angeordnet sind. Zudem kann in einer weiteren Ausgestaltung das Stützrohr mittels Streben an dem Dach, vorzugsweise an Binder, T-Stützen, Konterlattung und / oder an Sparren, verbunden sein.

Die Grundplatte weist oberseitig den Kragen auf, welcher von dem einen Ende des Stützrohrs aufgenommen wird.

Die Grundplatte kann Scharniere aufweisen, mit welchen die im Querschnitt U-förmig ausgestalteten Krallen, Vorsatzkralle oder Zugkralle um eine Drehachse geschwenkt werden können und beispielsweise einen T-Träger als Tragelement zwecks Fixierung der Grundplatte an demselben zu untergreifen vermögen. Die Krallen können mit Hilfe von herkömmlichen Schraubverbindungen an dem T-Träger lagesicher fixiert werden.

An den Ecken und / oder Seiten der Grundplatte können Löcher mit Gewinde ausgefräst sein, in welche die herkömmlichen Abstandshalter , z.B. von oben in Richtung Tragelement, eingeführt, wie eingedreht, werden können, um die Lage der Grundplatte bezogen auf das Tragelement einstellen und festlegen zu können. Mittels Schrauben, die von oben durch die als Gewindelöcher ausgebildeten Löcher eingeschraubt werden können, kann das Stützrohr auf das Tragelement, z.B. einen Stahlbetonträger, auf einfache Weise lotrecht ausgerichtet werden. An den Ecken und / oder der Grundplatte können auch Löcher, wie Langlöcher, mit Gewinde ausgefräst sein, in welche herkömmliche Schrauben angeordnet sein können, um die Ausrichtung der Grundplatte auf dem Tragelement durch Drehung zu erleichtern.

An dem einen Ende des Stützrohres kann gleichfalls die Grundplatte mit Hilfe einer Gelenkeinrichtung gekoppelt werden In einer besonderen Ausgestaltung der Verbindung des Stützrohres mit der Grundplatte auch mit Hilfe einer Gelenkeinrichtung zeigt sich das hohe Maß an Anpassbarkeit des Stützrohrs an verschiedene Ausbildungen der Tragelemente, so dass das Stützrohr in alle Richtungen einschwenkbar, einstellbar und dauerhaft festlegbar ist und das erfindungsgemäße Gestell jedweder Ausgestaltung von Dächern, Dachaufbauten, Dachtragwerken, Tragelementen, auf Tragelementen ruhenden Trageinrichtungen, wie Trapezblechen, Dachschicht, Dacheindeckungselement angepasst werden kann. Die lagesichere und dauerhafte Fixierung des Stützrohrs mit der Grundplatte an dem Tragelement durch den Reib-, Form- und / oder Kraftschluss der Verbindungsvorrichtung oder des Kugelkopfes des Stützrohrs mit der an der Grundplatte angeformten Kugelkopfhülse kann ebenso den durch Windsog und Winddruck auf die Dachaufbauten einwirkenden und von diesen auf das Stützrohr weitergeleiteten Windlasten widerstanden werden. Der Kugelkopf ist innenseitig ggf. korrosionsgeschützt. In dem unteren Bereich des Kugelkopfes kann ein Durchbruch ausgefräst sein, welcher mit einer Kunststoffkappe verschließbar ist. Vorzugsweise ist der Bereich des Durchbruchs durch die Bedeckung mit der Kugelkopfhülse vor mechanischem Eingriff und Witterungseinfluss zusätzlich geschützt.

In einer bevorzugten Ausgestaltung des erfindungsgemäßen Gestell kann die Grundplatte mit mindestens einem Abstandhaltern verbunden sein, welche die Grundplatte in einer bestimmbaren Lage von dem Tragelement hält. Als Abstandshalter eignen sich herkömmliche in Gewinden geführte Stellschrauben, selbstsichernde Stellschrauben, Stellschrauben mit Gegenmuttern, oder dergleichen. Um eine dauerhafte lagesichere Fixierung des Gestells an dem Tragelement des Dachs zu ermöglichen, kann die Grundplatte mit Verbindungsvorrichtungen mit dem Tragelement verbunden werden. Zusätzlich oder alternativ hierzu kann die Grundplatte außenrandig nach unten umgreifend ausgebildet sein, so dass der nach unten umgreifende Rand bei Fixierung der Grundplatte mit dem Tragelement in dieses einzugreifen bzw. einzukrallen vermag. Ebenso kann die Grundplatte mittels Vorsatzkrallen oder Zugkrallen mit dem Tragelement des Dachs verbunden werden, um eine hinreichende Lagestabilität des erfindungsgemäßen Gestells auf dem Tragelement zu bewerkstelligen.

Die Lochplatte ist zur Kopplung an Dachaufbauten vorgesehen, worunter im Sinne der Erfindung auch die lösbare und / oder unlösbare Verbindung der Lochplatte mittels der Gelenkeinrichtung zu verstehen sein kann.

An dem anderen Ende des Stützrohres kann eine Lochplatte mit Hilfe von Gelenkeinrichtungen und / oder sonstiger Verbindungsvorrichtungen oder Verbindungseinrichtungen zur Einstellung der Neigung der Lochplatte gekoppelt sein. Die Gelenkeinrichtung kann beispielsweise ein herkömmliches Kugelgelenk sein. Mit Hilfe des Kugelgelenks kann die Lage der Dachaufbauten festgelegt werden.

Unter Festlegung wird im Sinne der Erfindung auch verstanden, dass die Einstellung oder die Ausrichtung der Dachaufbauten trotz der auf die Dachaufbauten einwirkenden Witterungsbedingungen, wie Winddruck, -sog, usw. unverändert ist, arretiert verbleibt. Unter Festlegung wird im Sinne der Erfindung auch verstanden, dass die Einstellung oder die Ausrichtung der Dachaufbauten nachträglich noch durch den Benutzer -je nach Erfordernis- verändert werden kann. Die Gelenkeinrichtung ermöglicht vorteilhafterweise die die hinreichende Arretierung wie auch die nachträgliche Neuausrichtung der Dachaufbauten.

Das Kugelgelenk umfasst einen Kugelkopf, welcher an dem anderen Ende des Stützrohrs über einen Steg angeformt oder angeschraubt sein kann. Der Kugelkopf wird von einer Kugelkopfhülse aufgenommen. Die Kugelkopfhülse oder ein Teil derselben kann mit der Lochplatte fest oder lösbar verbunden sein. Diese ist zum Beispiel zweiteilig ausgestaltet und umfasst zwei annähernd halbkugelschalenartige Hülsenteile mit z.B. einem Durchtritt für einen Steg. Die halbkugelschalenartig ausgebildeten Hülsenteile können mit Hilfe einer Verbindungsvorrichtung oder -einrichtung, beispielsweise einer herkömmlichen Schraubverbindung, wie Spannschrauben, lösbar miteinander verbunden werden. Durch die reib-, form- und / oder kraftschlüssige Verbindung der Hülsenteile mit dem Kugelkopf mit Hilfe der Verbindungsvorrichtung oder -einrichtung kann die Lage oder die Neigung der Lochplatte im Fall der Montage vor Ort, gegenüber dem Stützrohr, eingestellt und festgestellt werden. Ebenso kann durch die reib-, form- und / oder kraftschlüssige Verbindung der Hülsenteile die Lage der Lochplatte nach der Montage zum Beispiel im Fall des Ersatzes der Dachaufbauten durch sonstige nachträglich eingestellt und festgestellt werden. Das Kugelgelenk hält die Lochplatte, an welche über deren den Dachaufbauten zugewandten Auflager die Dachaufbauten gekoppelt werden, in der vorgenannten Neigung oder Winkel, ohne dass eine Nachjustierung oder eine sonstige Veränderung der Lage der Lochplatte und der an der Lochplatte gekoppelten Dachaufbauten erforderlich ist. An die Lochplatte können ebenso unmittelbar -ohne auflager- die Dachaufbauten gekoppelt werden.

Das erfindungsgemäße Gestell zeichnet sich durch die gelenkige Kopplung des Stützrohrs an der Lochplatte durch die stufenlose Einstellbarkeit und Anpassbarkeit der Lochplatte mit Dachaufbauten an verschiedenste Ausgestaltungen an Dächern, Dachaufbauten, Dachtragwerken, Dachschicht, Dacheindeckungselement aus.

In einer bevorzugten Ausgestaltung dient die Grundplatte zur Befestigung des erfindungsgemäßen Gestells an Tragelementen, z.B. an oder auf Sparren, Spannriegel, Streben, Dachbalken von Dächern des belüfteten und des unbelüfteten Typs, Glattbleche, Konterlattung von Dächern des belüfteten und unbelüfteten Typs, Sparren von Flachdächern des belüfteten und unbelüfteten Typs, Bindern und / oder T-Träger von Flachdächern, beispielsweise von Trapezblechdächern, und dergleichen.

Die Gelenkeinrichtung zeichnet sich auch durch den Vorteil aus, dass die Lochplatte in alle Richtungen einschwenkbar, einstellbar und dauerhaft festlegbar ist. Die lagesichere Fixierung der Lochplatte an dem Stützrohr als dauerhafte Festlegung durch den Reib-, Form- und / oder Kraftschluss der Gelenkeinrichtung, wie des Kugelkopfes mit der Kugelkopfhülse, widersteht den durch Windsog und Winddruck auf die Dachaufbauten einwirkenden und von diesen auf das Stützrohr weitergeleiteten Windlasten, so dass eine Lageveränderung der Dachaufbauten nicht beobachtet wird.

Das Stützrohr, die Grundplatte, die Glattblech-Manschette, die Gelenkeinrichtung, Verbindungsvorrichtungen, Verbindungseinrichtungen und / oder die Lochplatte können mit Metallen, Kunststoffen, glasfaserverstärkten Kunststoffen und / oder kohlenstofffaserverstärkten Kunststoffen hergestellt sein. Das Stützrohr kann innen mit einem Wärmedämmmaterial ausgefüllt sein, um das Entstehen von Kältebrücken zur vermeiden. Das Stützrohr, die Gelenkeinrichtung, die Grundplatte, Verbindungseinrichtungen, Verbindungsvorrichtungen, und / oder die Lochplatte können zudem mit einem Korrosionsschutz versehen sein. Der Korrosionsschutz kann aufgetragen sein, zum Beispiel aufgesprüht, aufgepinselt, usw..

Eine Glattblech-Manschette kann mit ihrer, vorzugsweise mittigen, Lochung oder Öffnung über das Stützrohr geführt sein, bis die Glattblech-Manschette zum Aufliegen gegen oder auf der auf Tragelementen ruhenden Trageinrichtung, wie dem Trapezblech, gelangt. Mittels herkömmlicher Verbindungsvorrichtungen kann die Glattblech-Manschette mit der Trageinrichtung verbunden sein, um die Lagesicherheit des Stützrohrs mit der Trageinrichtung, wie dem Trapezblech, zu erhöhen. Vorteilhafterweise hat die Glattblech-Manschette in der Draufsicht einen Durchmesser D, der größer als der Durchmesser C oder der Durchmesser A und kleiner als der Durchmesser B sein kann.

Das erfindungsgemäße Gestell weist zudem eine Dämmstoffhülse auf, in welcher eine Manschette mit ihrem nach oben hervorkragenden Rand eingeführt sein kann. Die Dämmstoffhülse kann einen mittigen Hülsenkanal zur Aufnahme des Stützrohrs oder eines Teils desselben aufweisen, welcher sich längs der Mitte-Längsachse der Dämmstoffhülse erstrecken kann. Der Hülsenkanal geht z.B. in die Öffnung der Manschette über. Über das Stützrohr kann die Dämmstoffhülse mit ihrem Hülsenkanal und ihrer Manschette geführt werden. Ebenso kann in einer Ausgestaltung die Dämmstoffhülse entlang Ihrer Mitte-Längsachse aufklappbar und bei Anlegen um das Stützrohr dieses z.B. elastisch umgreifen. Die Dämmstoffhülse kann in ihrem oberen dem anderen Ende des Stützrohrs zugewandten Bereich eine Dichtlippe zum dichtenden Anliegen an der Außenseite des Stützrohrs aufweisen. So kann die Dämmstoffhülse in die Dichtlippen übergehen oder Dichtlippen sind an ihrem oberen Ende angeformt.

In einer weiteren Ausgestaltung kann die Dämmstoffhülse an ihrem dem anderen Ende des Stützrohrs zugewandten Ende eine oder mehrere umlaufende oder unterbrochen sich erstreckende Dichtlippen zudem aufweisen. Jede Dichtlippe begrenzt die dem anderen Enden des Stützrohrs zugewandte Lochung oder Öffnung des Hülsenkanals der Dämmstoffhülse und kann in Richtung in das Innere der Lochung oder des Kanals hineinragen. Da die Dichtlippe sich elastisch gegen die Außenseite des Stützrohrs anschmiegen, wird hinzutretend die abdichtende Wirkung der Dämmstoffhülse unterstützt.

In dem oberen Bereich der Dämmstoffhülse kann diese mit ihren Dichtlippen gegen die Außenseite des Stützrohres auch derart gleichmäßig dichtend vorteilhafterweise anliegen, dass die Lagesicherheit der Dämmstoffhülse relativ zu dem Stützrohr wirkungsvoll unterstützt wird und einem Wegziehen der Dämmstoffhülse entgegenwirken können. Die Dämmstoffhülse kann gegen das eine Ende des Stützrohrs anliegen, was z.B. abhängig von der Länge des Stützrohrs und / oder der der Dämmstoffhülse sein kann. Die Dämmstoffhülse kann mit der eingeschäumten Manschette an der Außenseite des Stützrohrs Fläche an Fläche dichtend anliegen. Als elastisches Material der Dichtlippe kann z.B. kunststoffartiges, auch gummielastisches, Material verwendet werden. In einer weiteren Ausgestaltung kann die Dämmstoffhülse an ihrem dem anderen Ende und oder dem einem Ende des Stützrohrs zugewandten Ende eine umlaufende Dichtlippen aufweisen, Die Dichtlippen begrenzen die ober- und oder unterseitige Lochungen oder Öffnungen des Hülsenkanals der Dämmstoffhülse und ragen in Richtung in das Innere derselben. Die Dichtlippen schmiegen sich elastisch gegen die Außenseite des Stützrohrs an und unterstützen hinzutretend die abdichtende Wirkung der Dämmstoffhülse.

Die Dämmstoffhülse kann mit einem herkömmlichen Material zur Wärmedämmung gefertigt sein. Die Dämmstoffhülse weist vorteilhafterweise zentriert die Öffnung mit dem Hülsenkanal auf, durch welche das Stützrohr im Fall des Aufbringens der Dämmstoffhülse auf das Stützrohr hindurchgeführt wird. Die Dämmstoffhülse kann mit der Manschette soweit von dem anderen Ende zu dem einen Ende des Stützrohrs geführt werden, bis die Manschette mit ihrem äußeren Rand auf der Dachabdichtungsschicht und / oder der Zusatzmanschette aufliegt und mit denselben verklebt oder verschweißt wird. Die Dämmstoffhülse ermöglicht eine hinreichende Wärmedämmung und Abdichtung des Spalts zwischen dem Stützrohr und der Dämmstoffschicht, so dass keine Feuchtigkeit in den Spalt aufgrund von beispielsweise Wasserkapillarkräften einzudringen vermag. Die Dämmstoffhülse kann zum Beispiel in der Draufsicht kreisbogenförmig, eckig, viel- oder mehreckig ausgebildet sein.

In einer besonderen Ausgestaltung kann zumindest die oberseitige Lochung oder Öffnung der Dämmstoffhülse ein Innengewinde aufweisen, welches mit einem Außengewinde des Stützrohres zusammenwirken kann, um eine dauerhafte lagesichere Fixierung der Dämmstoffhülse mit dem Stützrohr bereitzustellen und die Manschette unter Kraftbeaufschlagung gegen die Dämmstoffschicht bei Anziehen der Dämmstoffhülse anliegt.

Die Dämmstoffhülse kann mit ihrer Manschette gegen die oder auf der Dachabdichtungsschicht anliegen, welche mit ihrem äußeren Randbereich mit der Dachabdichtungsschicht der Dachschicht eines Dachs wasserdicht und dauerhaft verbunden, wie verklebt, z.B. mittels herkömmlicher Butyl-Dichtbändern, und / oder verschweißt wird.

Die Manschette kann mit Metall und / oder kunststoffartigen Materialien hergestellt sein. Die Manschette kann z.B. scheiben- oder plattenförmig, vorzugsweise in der Draufsicht kreisbogenförmig, eckig, vieleckig oder achteckig, usw, mit einer, vorzugsweise mittigen, Öffnung oder Durchbruch zur Aufnahme des Stützrohrs ausgebildet sein, wobei die Öffnung bzw. der Durchbruch mit dem Hülsenkanal der Dämmstoffhülse in Verbindung stehen kann. Ihre Öffnung ist vorzugsweise von einem in Richtung zu den Dichtlippen der Dämmstoffhülse hin hervorkragenden, z.B. rohrförmigen, Rand begrenzt, der in die Dämmstoffhülse eingeführt oder von der Dämmstoffhülse aufgenommen sein kann. Der Rand kann in Richtung zu Dichtlippen der Dämmstoffhülse ausgerichtet und senkrecht zu der scheibenförmigen Manschette ausgerichtet sein. Der rohrförmige Rand kann als Vierkantrohr, Vielkantrohr oder Rundrohr oder dergleichen ausgestaltet sein. Der die Öffnung begrenzende Rand der Manschette kann einen Teil des Stützrohrs aufnehmen. Der Rand der Manschette ist von der Dämmstoffhülse vorzugsweise eingeschäumt, so dass der Rand mit beiden Seiten an das Material der Dämmstoffhülse angrenzen kann. Die Manschette und die Dämmstoffhülse sind vorzugsweise einstückig ausgestaltet. Die Manschette kann mit der Dämmstoffhülse auch mit Klebebändern, insbesondere Butyldichtbändern, vorzugsweise wasserdicht und dauerhaft, verbunden sein.

Die Manschette ist zur Auflage auf einer wasserdichten Dachabdichtungsschicht, Zusatzmanschette und / oder Lochsägenfüllung eines Dachs geeignet ist, vorzugsweise wird die Manschette mit der wasserdichten Dachabdichtungsschicht eines Dachs wasserdicht und dauerhaft verklebt oder verschweißt. Insbesondere kann die Manschette mit ihrem äußeren Randbereich mit der Zusatzmanschette und / oder der Dachabdichtungsschicht eines Dachs wasserdicht und dauerhaft verbunden, vorzugsweise mittels Butyl-Dichtbändern, verklebt oder verschweißt sein. Über das Stützrohr kann die Dämmstoffhülse mit ihrer Manschette geführt werden, wobei die Manschette gegen die Zusatzmanschette und / oder die Lochsägenfüllung ebenso zum Aufliegen gebracht werden.

In einer weiteren Ausgestaltung kann die Manschette mit einem Material der wasserdichten Dachabdichtungsschicht wasserdicht und dauerhaft verbindbar ist, wobei die Manschette mit Klebebändern, insbesondere Butyldichtbändern, zur dichten Kopplung an das Stützrohr innenseitig versehen ist und / oder die Dämmstoffhülse mit der Manschette mit Klebebändern, insbesondere Butyldichtbändern, dichtend verklebt ist.

Der Rand der Manschette liegt mit seiner Innenfläche vorteilhafterweise Fläche an Fläche an der Außenseite des Stützrohres an, falls z.B. der Rand nicht in der Dämmstoffhülse eingeschäumt ist Vorzugsweise kann die Manschette mit einem Material der wasserdichten Dachabdichtungsschicht hergestellt sein. Die Manschette dient z.B. zum Aufliegen gegen die Dachabdichtungsschicht und kann mit dieser wasserdicht und dauerhaft mittels herkömmlicher Kleber verklebt werden.

In einer weiteren Ausgestaltung des erfindungsgemäßen Gestell kann zumindest ein Teil der Manschette, beispielsweise ihr in Richtung Dichtungslippen nach oben hervorkragender Rand von der Außenseite des Stützrohres beabstandet sein und in den unteren Bereich der Dämmstoffhülse formschlüssig eingreifen oder eingeschäumt sein, so dass der Rand der Manschette von der Dämmstoffhülse innen- und außenseitig wärmedämmend begrenzt ist. Durch diese weitere Ausgestaltung wird hinzutretend dem Entstehen von Kältebrücken entgegengewirkt und wird die Formstabilität der Dämmstoffhülse unterstützt.

In einer besonderen Ausgestaltung kann zumindest die oberseitige Lochung der Dämmstoffhülse ein Innengewinde aufweisen, welches mit einem Außengewinde des Stützrohres zusammenwirken kann, um eine dauerhafte lagesichere Fixierung der Dämmstoffhülse mit dem Stützrohr bereitzustellen und die Manschette unter Kraftbeaufschlagung gegen die Dämmstoffschicht bei Anziehen der Dämmstoffhülse anliegt.

Eine Manschette-Dampfsperrfolie kann mit ihrer, vorzugsweise mittigen, Lochung oder Öffnung über das Stützrohr geführt und ebenso auf der Glattblech-Manschette und der Dampfsperre aufliegen. Ihr äußerer Randbereich kann mit der Dampfsperre und / oder Trageinrichtung einer Dachschicht eines herkömmlichen Dachs wasserdicht und / oder dauerhaft verbunden, vorzugsweise mittels Klebebändern, wie Butyl-Dichtbändern, verklebt und / oder verschweißt sein. Ihr innerer Randbereich kann mit dem Stützrohr wasserdicht und dauerhaft verbunden, vorzugsweise mittels Butyl-Dichtbändern, verklebt oder verschweißt sein. Anschließend erfolgt die Verfüllung des Hohlraums mittels der Lochsägenfüllung mit dem Durchmesser B, die gegen die oder auf der Manschette-Dampfsperrfolie aufliegt. Der Durchmesser B der Manschette-Dampfsperrfolie entspricht vorteilhafterweise dem Durchmesser B der äußeren Lochsägenfüllung.

Die Manschette-Dampfsperrfolie kann mit kunststoffartigen Materialien hergestellt sein. Die Manschette-Dampfsperrfolie kann mit dem Material der Dampfsperre der Dachschicht übereinstimmen. Die Manschette-Dampfsperrfolie kann z.B. scheiben- oder plattenförmig, vorzugsweise in der Draufsicht kreisbogenförmig, eckig, vieleckig oder achteckig, usw, mit einer, vorzugsweise mittigen, Öffnung oder Durchbruch zur Aufnahme des Stützrohrs ausgebildet sein.

Zudem kann die Dämmstoffhülse mit der Manschette gegen eine Zusatzmanschette anliegen. Die äußeren Randbereiche der Manschette können mit der Zusatzmanschette wasserdicht und dauerhaft verbunden sein. Die Zusatzmanschette kann von einer Glattblech-Manschette mit einem Abstand A beabstandet sein. Der Abstand A kann der Schichtdicke der äußeren Lochsägenfüllung entsprechen. Der Abstand A kann auch der Summe aus Schichtdicke der äußeren Lochsägenfüllung, Schichtdicke der Dachabdichtungsschicht und Schichtdicke der Manschette-Dampfsperrfolie entsprechen.

In einer weiteren Ausgestaltung kann zusätzlich vor dem Einsetzen einer Dämmstoffhülse eine Zusatzmanschette mit Ihrer mittigen Lochung Öffnung über das Stützrohr geführt sein, so dass die Zusatzmanschette zum Aufliegen gegen die Lochsägenfüllung gelangt und mittels herkömmlicher Verbindungsvorrichtungen mit der Glattblech-Manschette verbunden ist. Ihr äußerer Randbereich, der über die Zusatzmanschette hinausreicht, ist vorzugsweise wasserdicht und / oder dauerhaft mit der Dachabdichtungsschicht und / oder der Lochsägenfüllung der Dachschicht des Dachs verbunden, vorzugsweise mittels Butylbänder, verklebt oder verschweißt. Die Zusatzmanschette hat in der Draufsicht z.B. einen Außendurchmesser auch Außendurchmesser E oder Durchmesser E genannt, welcher kleiner oder größer als der Durchmesser E der Manschette, oder gleich dem Durchmesser E der Manschette ist; ebenso kann er größer als der Durchmesser C des Trapezbleches oder B der äußeren Lochsägenfüllung sein.

So können in Verfahrensschritten über das Stützrohr die Zusatzmanschette mit einem Außendurchmesser, welcher kleiner als der Durchmesser E und größer als der Durchmesser C ist, geführt, welche zum Aufliegen gegen die äußere Lochsägenfüllung gelangt und mittels Verbindungsvorrichtungen mit der Glattblech-Manschette, vorzugsweise gemäß FDRL, verbunden und deren äußere Randbereiche wasserdicht und dauerhaft mit Dachabdichtungsschicht verbunden, vorzugsweise mittels Butylbänder, verklebt und / oder verschweißt wird, und über das Stützrohr eine Dämmstoffhülse mit einer Manschette geführt werden, wobei die Manschette gegen die Zusatzmanschette zum Aufliegen gebracht wird und mit ihrem äußeren Randbereich mit der Zusatzmanschette, vorzugsweise mittels Butyl-Dichtbändern, wasserdicht verklebt wird.

Vorzugsweise ist die Zusatzmanschette kann z.B. scheiben- oder plattenförmig, vorzugsweise in der Draufsicht kreisbogenförmig oder eckig, vieleckig oder achteckig, usw, mit einer, vorzugsweise mittigen, Öffnung oder Durchbruch zur Aufnahme des Stützrohrs ausgebildet sein.

Randbereiche der Zusatzmanschette können zur wasserdichten Verbindung mit einer Dachabdichtungsschicht geeignet sein. Die Glattblech-Manschette ist mittels Verbindungsvorrichtungen mit einer auf dem Tragelement ruhenden Einrichtung, wie Trapezblech verbindbar. Auf der Glattblech-Manschette kann die Manschette-Dampfsperrfolie aufliegen, welche mit dem Stützrohr wasserdicht verbunden sein und mit einer Dampfsperre wasserdicht verbindbar ist. Die Zusatzmanschette kann mit Metall und / oder kunststoffartigen Materialien hergestellt sein; auch kann sie mit dem Material der Dachabdichtungsschicht übereinstimmen.

Ein weiterer Gegenstand der Erfindung betrifft ein Verfahren, mit welchem das erfindungsgemäße Gestell für Dachaufbauten an Tragelementen von Dächern, wie Flachdächern und sonstigen Dachformen gekoppelt werden kann.

So können nach dem Verfahren zur Bereitstellung eines leicht handhabbaren Gestells zur Kopplung von Dachaufbauten an oder auf Dächern, vorzugsweise Flachdächern,
a. mittels zwei einander gekoppelter Lochsägen mit ringförmigen Sägeblättern unterschiedlichen Durchmessers gleichzeitig ein Durchbruch mit dem Durchmesser A oder lichte Weite B aus einer eine Dachabdichtungsschicht, welche auf der Dämmschicht liegt, und der Dämmstoffschicht umfassenden Dachschicht des Dachs zur Bereitstellung einer inneren Lochsägenfüllung herausgefräst und entnommen wird; die innere Lochsägenfüllung ist vorzugsweise von kreisscheibenförmiger Form.
   Weiterhin wird in Verfahrensschritt a. ein Durchbruch mit dem Durchmesser B aus der die Dämmstoffschicht und die Dachabdichtungsschicht umfassenden Dachschicht des Dachs zur Bereitstellung einer äußeren Lochsägenfüllung ausgefräst und diese entnommen, die äußere Lochsägenfüllung ist vorteilhafterweise von ringförmiger Form.
   In einer besonderen Ausgestaltung kann das innere Lochsägenblatt eine Höhe H haben, welche mit der Höhe H des äußeren Lochsägenblattes übereinstimmt. Durch das innere Lochsägenblatt können der Durchbruch mit dem Durchmesser A oder der lichten Weite A aus der Dachabdichtungsschicht, welche auf der Oberseite der Dämmschicht liegt, und aus der Dämmstoffschicht herausgefräst und entnommen wird. Daher kann unter innerer Lochsägenfüllung auch die die Dachabdichtungsschicht und die Dämmstoffschicht enthaltende im Sinne der Erfindung verstanden werden.
   In einer weiteren Ausgestaltung kann das innere Lochsägenblatt eine Höhe H haben, welche größer ist als die Höhe H des äußeren Lochsägenblattes. Durch das innere Lochsägenblatt können sowohl der Durchbruch mit dem Durchmesser A oder der lichten Weite A aus der Dachabdichtungsschicht, welche auf der Oberseite der Dämmschicht liegt, und aus der Dämmstoffschicht, als auch der aus der an der Unterseite der Dämmschicht angeordneten Dampfsperre herausgefräst und entnommen wird; die innere Lochsägenfüllung ist vorzugsweise von kreisscheibenförmiger Form. Daher kann unter innerer Lochsägenfüllung auch die die Dachabdichtungsschicht, die Dämmstoffschicht und die Dampfsperre enthaltende im Sinne der Erfindung verstanden werden.
   In Verfahrensschritt b. wird anschließend mittels einer Lochsäge mit einem ringförmigen Sägeblatt ein Durchbruch mit einem Durchmesser C oder einer lichten Weite C aus der Dampfsperre und aus der auf dem Tragelement ruhenden Trageinrichtung, z.B. dem Trapezblech, ausgefräst.
   Dann in den folgenden Verfahrensschritten c. eine Grundplatte durch die Durchbrüche hindurchgeführt und mit dem Tragelement, vorzugsweise einem Binder, des Dachs mit Hilfe von Schraubverbindungen als Verbindungseinrichtungen verbunden wird,
d. das eine Ende des Stützrohrs durch die Durchbrüche hindurchgeführt und mit der Grundplatte mit Hilfe einer Verbindungseinrichtung verbunden, vorzugsweise auf diese aufgeschraubt, wird,
e. über das Stützrohr eine Glattblech-Manschette geführt und die Glattblech-Manschette mit der auf dem Tragelement ruhenden Trageinrichtung, z.B. dem Trapezblech, mittels Verbindungsvorrichtungen verbunden wird, wobei die Glattblech-Manschette einen Durchmesser D hat, der größer als der Durchmesser C des Trapezbleches ist,
f. über das Stützrohr eine Manschette-Dampfsperrfolie mit einem Durchmesser B geführt wird, welche mit ihrem äußeren Randbereich mit der Dampfsperre und mit ihrem inneren Randbereich mit dem Stützrohr, vorzugsweise mittels Butyl-Dichtbändern wasserdicht, verklebt wird und
g. über das Stützrohr die Lochsägenfüllung geführt und gegen die Manschette-Dampfsperrfolie zum Aufliegen gelangt.

Mit Hilfe von zwei mit einander gekoppelter Lochsägenblätter unterschiedlichen Durchmessers können in einem Verfahrensschritt zeit- und kostensparend sowohl ein Durchbruch mit dem Durchmesser A aus einer eine Dämmstoffschicht und einer Dachabdichtungsschicht umfassenden Dachschicht des Dachs zur Bereitstellung von einer sogenannten inneren Lochsägenfüllung, die verworfen wird, als auch ein Durchbruch mit dem Durchmesser B aus der die Dämmstoffschicht und die Dachabdichtungsschicht umfassenden Dachschicht des Dachs zur Bereitstellung von einer sogenannten äußeren Lochsägenfüllung ausgefräst und diese entnommen und beiseite gelegt werden.

Ebenso wird durch den Verfahrensschritt eine äußere Lochsägenfüllung bereitgestellt, die passgenau erneut in den Durchbruch mit dem Durchmesser B oder der lichten Weite B eingefügt werden kann, ohne dass Nachbearbeitungen an der Lochsägenfüllung oder dem Durchbruch bevorzugterweise erforderlich sind.

Da zudem die lichte Weite der Öffnung oder Innenloch genannt der ringförmigen äußeren Lochsägenfüllung dem Außendurchmesser des Stützrohrs entsprechen kann, kann die äußere Lochsägenfüllung leicht über das Stützrohr mit ihrer Öffnung geführt und sich passgenau dem Stützrohr anlegen.

Anschließend kann mittels eines Lochsägenblatts ein Durchbruch mit einem Durchmesser C aus der Dampfsperre und der auf dem Tragelement ruhenden Trageinrichtung, z.B. dem Trapezblech, ausgefräst werden, welche gleichfalls verworfen wird. Bevorzugterweise sind der Durchmesser A kleiner als der Durchmesser C und der Durchmesser B größer als der Durchmesser C, der als Durchmesser C des Trapezbleches genannt wird.

Eine Grundplatte wird zur Arbeitstellung durch den Durchbruch hindurchgeführt und mit dem Tragelement, vorzugsweise einem Binder, des Dachs mit Hilfe von Verbindungsvorrichtungen verbunden. Das eine Ende des Stützrohrs wird durch den Durchbruch hindurchgeführt und mit der Grundplatte mit Hilfe einer Verbindungseinrichtung mit Hilfe von herkömmlichen Verbindungseinrichtungen, beispielsweise mit Spannschrauben, verbunden oder mittels Schraubgewinden auf diese Grundplatte aufgeschraubt.

Dann wird über das Stützrohr die Glattblech-Manschette mit ihrer mittigen Lochung oder Öffnung geführt und die Glattblech-Manschette mit der auf dem Tragelement ruhenden Trageinrichtung, z.B. dem Trapezblech, mittels Verbindungsvorrichtungen, wie Schraub- oder Nietverbindungen, verbunden. Die Glattblech-Manschette hat in der Draufsicht einen Durchmesser D, der größer als der Durchmesser C des Trapezbleches und der Durchmesser A der inneren Lochsägenfüllung, und kleiner als der Durchmesser B der äußeren Lochsägenfüllung sein kann. Die Glattblech-Manschette ist mit dem Trapezblech mittels herkömmlicher Verbindungsvorrichtungen verbunden.

Das Stützrohr kann auch mit der Grundplatte durch den Durchbruch hindurchgeführt werden. Der Abstand zwischen der Grundplatte und dem Tragelement, beispielsweise einem T-Träger, kann mit Hilfe von an der Unterseite der Grundplatte angebrachten Abstandhaltern eingestellt werden. Die Grundplatte wird anschließend mit Hilfe von Spannschrauben mit dem Tragelement lagesicher verbunden.

In einer weiteren Ausführungsform des erfindungsgemäßen Verfahrens können an der Grundplatte mittels Scharniere schwenkbar angeordnete Krallen oder Vorsatzkrallen um den oberen Schenkel des T-Trägers geschwenkt werden, so dass diese den oberen, dem Stützrohr zugewandten Schenkel des T-Trägers beidseitig untergreifen. Die Krallen oder Vorsatzkrallen werden gleichfalls mittels Spannschrauben mit dem oberen Schenkel des T-Trägers lagesicher fixiert.

Danach wird über das Stützrohr eine Manschette-Dampfsperrfolie mit ihrer mittig angeordneten Lochung oder Öffnung geführt. Die Manschette-Dampfsperrfolie kann mit ihrem äußeren Randbereich mit der Dampfsperre der Dachschicht des Dachs und mit ihrem inneren Randbereich mit dem Stützrohr wasserdicht und dauerhaft verbunden, vorzugsweise mittels Butyl-Dichtbändern, verklebt oder verschweißt sein. Die Manschette-Dampfsperrfolie hat in der Draufsicht einen Durchmesser B, der dem Durchmesser B der äußeren, vorzugsweise ringförmige Lochsägenfüllung entsprechen kann. Über das Stützrohr wird die zuvor entnommene äußere Lochsägenfüllung mit dem Durchmesser B mit oder ohne Dachabdichtungsfolie mit dem Durchmesser B geführt und auf die Manschette-Dampfsperrfolie aufgebracht oder aufgelegt. Die äußere Lochsägenfüllung weist eine zentriert angeordnete Lochung mit der lichten Weite auf, die dem Durchmesser A der inneren Lochsägenfüllung weitgehend entspricht. Die größere, äußere Lochsägenfüllung wird mit ihrer Lochung über das Stützrohr geführt. Über das Stützrohr kann anschließend die Dämmstoffhülse mit der Manschette soweit aufgebracht oder geführt werden, dass die Manschette der Dämmstoffhülse auf der Lochsägenfüllung mit oder ohne Dachabdichtungsschicht der Dachschicht des Dachs zum Aufliegen gebracht ist. Die Manschette hat in der Draufsicht einen Durchmesser E, der größer als der Durchmesser B der äußeren Lochsägenfüllung sein kann. Die Manschette wird mit ihrem äußeren Randbereich mit der Dachabdichtungsschicht, vorzugsweise mittels Butyl-Dichtbändern wasserdicht, verklebt. Die Dämmstoffhülse liegt mit ihrer um die mittige Lochung umlaufenden Dichtlippe gegen das Stützrohr an.

In einem weiteren Verfahrensschritt des Verbringens der Dämmstoffhülse auf das Stützrohr werden das andere Ende des Stützrohres durch die zentrale Lochung oder Hülsenkanal der Dämmstoffhülse hindurchgeführt und die Dämmstoffhülse mit Manschette entlang des Stützrohres bis zum Anliegen der Manschette auf der Dachabdichtungsschicht geführt. Alternativ kann auch zuerst die Manschette mit ihrer Lochung über das andere Ende des Stützrohrs geführt und dann die Dämmstoffhülse über das andere Ende des Stützrohres geführt werden bis zum Aufliegen der Dämmstoffhülse auf der Manschette und / oder Einführen des aufrecht stehenden Rands der Manschette in die Dämmstoffhülse. In einer weiteren Ausformung des erfindungsgemäßen Verfahrens kann das untere Ende der Dämmstoffhülse ganzflächig mit einer Klebschicht versehen sein.

Nach dem Auflegen der Lochsägenfüllung gegen die oder auf die Manschette-Dampfsperrfolie kann ebenso vor dem Aufbringen der Dämmstoffhülse mit oder ohne die Manschette eine Zusatzmanschette mit ihrer mittigen Lochung über das Stützrohr geführt werden, um zum Aufliegen gegen die oder auf der Lochsägenfüllung mit oder ohne mit oder ohne Dachabdichtungsfolie zu gelangen. Mittels Verbindungsvorrichtungen können die Glattblech-Manschette und die Zusatzmanschette verbunden werden. Der äußere Randbereich der Zusatzmanschette kann wasserdicht und dauerhaft mit der Dachabdichtungsschicht verbunden, vorzugsweise mittels Butyl-Dichtbänder, verklebt oder verschweißt sein. Anschließend wird die Dämmstoffhülse mit der Manschette über das Stützrohr geführt und auf die Zusatzmanschette gelegt, wobei der äußere Randbereich der Manschette der Dämmstoffhülse mit der Zusatzmanschette und / oder der Dachabdichtungsfolie wasserdicht und dauerhaft verbunden, vorzugsweise mittels Butyl-Dichtbändern, verklebt oder verschweißt werden können.

Unter Außendurchmesser D kann im Sinne der Erfindung auch verstanden werden der Durchmesser D der, z.B. in Draufsicht kreisbogenförmigen, Glattblech-Manschette in der Draufsicht.
Unter Außendurchmesser E kann im Sinne der Erfindung auch verstanden werden der Durchmesser E der, z.B. in Draufsicht kreisbogenförmigen, Manschette in der Draufsicht.
Unter Außendurchmesser der, z.B. in Draufsicht kreisbogenförmigen, Zusatzmanschette kann im Sinne der Erfindung auch verstanden werden der Durchmesser D derselben in der Draufsicht.
Unter Außendurchmesser B kann im Sinne der Erfindung auch verstanden werden der Durchmesser D der, z.B. in Draufsicht kreisbogenförmigen, Manschette-Dampfsperrfolie in der Draufsicht.

Der Außendurchmesser E der scheibenförmigen Zusatzmanschette kann gleich, kleiner oder größer als der Außendurchmesser E der Manschette und / oder als der Außendurchmesser D der Glattblech-Manschette sein, er kann ebenso gleich oder größer als der Durchmesser B der äußeren Lochsägenfüllung sein. Der Durchmesser D der scheibenförmigen Glattblech-Manschette kann gleich oder größer als der Durchmesser C des Trapezbleches oder der Durchmesser A der inneren Lochsägenfüllung sein, er kann ebenso gleich oder kleiner als der Durchmesser B der äußeren Lochsägenfüllung sein. Der Außendurchmesser E der scheibenförmigen Zusatzmanschette kann größer als der Außendurchmesser D der Glattblech-Manschette oder Durchmesser B der äußeren Lochsägenfüllung sein.

Der Durchmesser B der äußeren Lochsägenfüllung kann größer als der Durchmesser C des Trapezbleches, der Durchmesser A der inneren Lochsägenfüllung und / oder der Außendurchmesser D der Glattblech-Manschette, kleiner als Durchmesser E der Manschette sein. Der Durchmesser C des Trapezbleches kann größer als der Durchmesser A der inneren Lochsägenfüllung sein. Der Durchmesser A der inneren Lochsägenfüllung kann kleiner als der Durchmesser C der Trapezbleches ist,

Das andere Ende des Stützrohres ist mit der Lochplatte über eine Gelenkeinrichtung derart verbunden, so dass der von Lochplatte und dem Stützrohr gebildete Winkel eingestellt und festgestellt werden kann sowie der Winkel als Neigungswinkel dauerhaft beibehalten wird. Die Gelenkeinrichtung umfasst einen Kugelkopf und eine den Kugelkopf aufnehmende Kugelkopfhülse, welche zweigeteilt sein kann. Diese kann in Form von halbkugelschalenartigen Teilen mit einem Durchtritt für den Steg, der den Kugelkopf mit dem Stützrohr verbindet, ausgestaltet sein. Diese können mit Hilfe von Spanneinrichtungen fest, also lagesicher, den Kugelkopf umfassen und reib-, kraft- und / oder formschlüssig mit dem Kugelkopf fixiert werden. An die an einer Kugelkopfhülse gekoppelte Lochplatte werden die Dachaufbauten gekoppelt und aufgrund der Gelenkeinrichtung kann die Position der Dachaufbauten vor Ort bei der Aufstellung des erfindungsgemäßen Gestells oder bei dem Verbringen des erfindungsgemäßen Gestells in Arbeitsposition je nach der Ausrichtung des Dachs vor Ort justiert werden, so dass eine wie im Stand der Technik zu beobachtende Verschattung tunlichst vermieden wird.,

Durch das erfindungsgemäße Verfahren zur Bereitstellung eines leicht handhabbaren Gestells zur Kopplung von Dachaufbauten in, an oder auf Dächern oder deren Dachtragewerken, vorzugsweise Flachdächern, kann auf einfache Weise in einem ersten Arbeitsschritt mittels zwei einander gekoppelter Lochsägen, die aus ringförmigen Sägeblättern oder Lochsägeblättern unterschiedlichen Durchmessers zusammengesetzt sind, ein Durchbruch z.B. aus einer eine Dämmstoffschicht und einer Dachabdichtungsschicht umfassenden Dachschicht des Dachs mit zwei Lochsägenfüllungen mit Durchmessern A und B ausgefräst werden, dann in einem weiteren Verfahrensschritt mit einem Lochsägenblatt mit dem Durchmesser C z.B. aus der Dampfsperre und aus dem Trapezblech ausgefräst werden.

In einer Ausführungsform des erfindungsgemäßen Verfahrens kann die Dämmstoffhülse mit ihrer Lochung auf ein Außengewinde eines Teils des Stützrohrs aufgeschraubt und, vorzugsweise mit Hilfe von Schraubensicherungen, Formschlusselemente, Rohrschellen und / oder Zentrierbunden, zur Vermeidung von Relativbewegungen der Teile gegeneinander festgezogen werden. Zudem ist es möglich, dass in einer weiteren Ausführungsform des erfindungsgemäßen Verfahrens die Manschette mit Hilfe von Dichtbändern, insbesondere Butyldichtbändern, abdichtend mit der Dämmstoffschicht, Dachabdichtungsschicht und / oder Dampfsperre versehen wird.

Durch das erfindungsgemäße Verfahren können bereits vorgefertigte Module des erfindungsgemäßen Gestells, z.B. bestehend aus dem Stützrohr und der Grundplatte oder der Lochplatte, aus dem Stützrohr und der Grundplatte und der Lochplatte, vorgefertigt werden und diese vorgefertigten Module vor Ort mit den Tragelementen des herkömmlichen Dachs gekoppelt werden, so dass durch die Vormontierung ein umständliches Zusammenbauen aller Teile erst vor Ort, wie es im Stand der Technik erforderlich ist, entfallen kann.

Vorteilhafterweise kann die Neigung der mit der Lochplatte gekoppelten Dachaufbauten auch nachträglich zum Beispiel im Falls des Ersetzens der Dachaufbauten durch weiterentwickelte ohne Weiteres angepasst werden.

Das erfindungsgemäße Gestell macht die Gerüststellung an Fachdächern und geneigten Dächern überflüssig. Auch ist kein Sicherheitsgerüst von innen zur Montage erforderlich.

Zudem kann das erfindungsgemäße Gestell vormontiert im industriellen Maßstab als Module hergestellt werden, so dass die Herstellungskosten sich verringern.

Ebenfalls kann das erfindungsgemäße Gestell an Tragelementen verschiedenster Ausgestaltungen, wie sie in Flach- und geneigten Dächern zu finden sind, verbunden werden.

Das erfindungsgemäße Gestell ermöglicht die Montage in automatisierten Arbeitsschritten, so dass die Montagedauer sich merklich verkürzt.

Schließlich zeichnet sich das erfindungsgemäße Gestell durch gleich bleibende Qualität trotz geringer Herstellungs- und Montagedauer im Gegensatz zum Stand der Technik aus.

Ebenso bietet das erfindungsgemäße Gestell aufgrund der Verwendung lediglich von Stützrohren Windlasten nur wenig Widerstand, so dass das erfindungsgemäße Gestell aufgrund der geringen Angriffsfläche eine geringere Kraftbeaufschlagung mit Windlasten aufweist.
Die erfindungsgemäße Gestell zeichnet sich ebenfalls durch eine hohe Anpassbarkeit an verschiedenste Dachgeometrien, beispielsweise Flachdächern und sonstigen Dachformen, aus, und kann trotz der Vormontage von Stützrohr mit der Lochplatte und / oder der Grundplatte vor Ort verbaut und auf einfache Weise nachjustiert werden.

Hinzukommend sind mit Hilfe des erfindungsgemäßen Gestells die Dachaufbauten und deren Neigung relativ zur Dachhaut vor Ort einstellbar und feststellbar, so dass Verschattungen nicht auftreten können.

Ebenso eignet sich das erfindungsgemäße Gestell aufgrund der Abdichtungen der Spalte zwischen Stützrohr und Dämmstoffschicht durch Manschette und Dämmstoffhülse zur hinreichenden Dämmung, wie Wärmedämmung.

Ebenfalls wird mit Hilfe des erfindungsgemäßen Gestells durch die Abdichtung des Spalts zwischen dem Stützrohr und der Dämmstoffschicht mit Hilfe der Manschette und der Dämmstoffhülse das Auftreten von Kältebrücken und ggf. die die Gesundheit der Bewohner beeinträchtigende Pilzbildung vermieden.

Ebenso wird mit Hilfe des erfindungsgemäßen Gestells durch die Abdichtung des Spalts zwischen dem Stützrohr und der Dämmstoffschicht mit Hilfe der Manschette und der Dämmstoffhülse das Eindringen von Feuchtigkeit oder von durch Kapillarkräfte sich einstellende Kriechwasser unterbunden.

Gleichfalls werden mit Hilfe des erfindungsgemäßen Gestells die durch Sog- und Druckwirkung auf das Stützrohr lastenden Kräfte auf die Tragelemente breitflächig weitergeleitet, so dass eine einseitige Belastung der Dachkonstruktion nicht zu beobachten ist.

Hinzukommend zeichnet sich das erfindungsgemäße Gestell durch eine hinreichende Anpassbarkeit sowohl an verschiedene Breiten der Tragelemente wie auch an die verschiedenen der Dachbauten aus.

Durch das einfache Ankoppeln der Grund- und der Lochplatten an das Stützrohr und Verbinden der Grundplatte an ein Tragelement werden nicht nur geringe Anforderungen an die Geschicklichkeit des Benutzers gestellt, sondern auch geringere Anforderungen an die Bereitstellung von Werkzeug und Gerüsten.

Da das leicht handhabbare Gestell mit Metallen, Kunststoffen, glasfaserverstärkten Kunststoffen und / oder kohlenstofffaserverstärkten Kunststoffen gefertigt ist, ist es hinreichend temperaturunabhängig und von ausreichender Steifigkeit.

Schließlich ist das Bereitstellen von Stellgerüsten und Sicherheitsgerüsten aufgrund der Einfachheit der Montage mit Hilfe des erfindungsgemäßen Verfahrens und des erfindungsgemäßen Gestells nicht erforderlich.

### Ausführungsbeispiele

Die Zeichnungen zeigen weitere vorteilhafte zweckmäßige Ausgestaltungen des Erfindungsgegenstandes aufgrund der zeichnerischen Vereinfachung in schematischer, stark vergrößerter Weise, ohne Anspruch auf eine maßstabsgetreue Wiedergabe in Ausführungsformen ohne Beschränkung auf die Erfindung auf diese in
Fig. 1 den Längsschnitt durch das erfindungsgemäße Gestell und die Dämmstoffschicht,

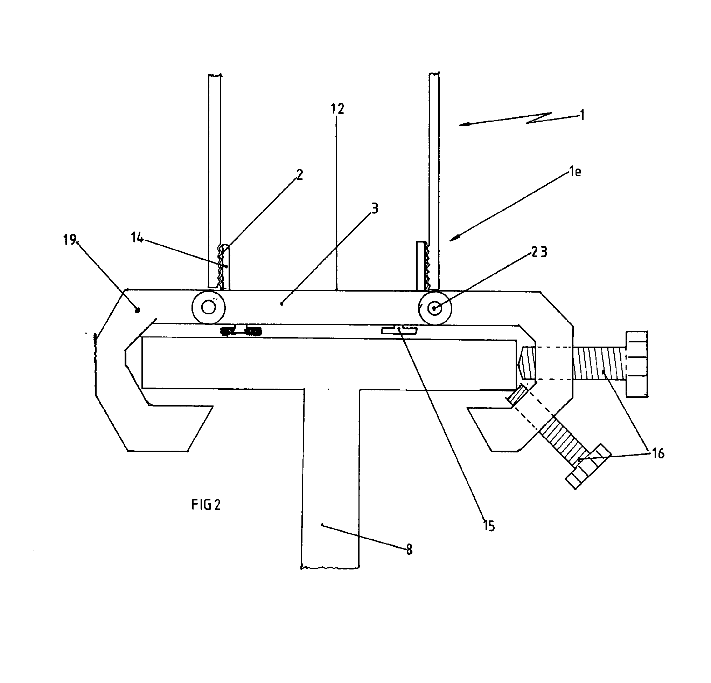

Fig. 2 den Längsschnitt durch das erfindungsgemäße Gestell und den T-Träger als Tragelement,

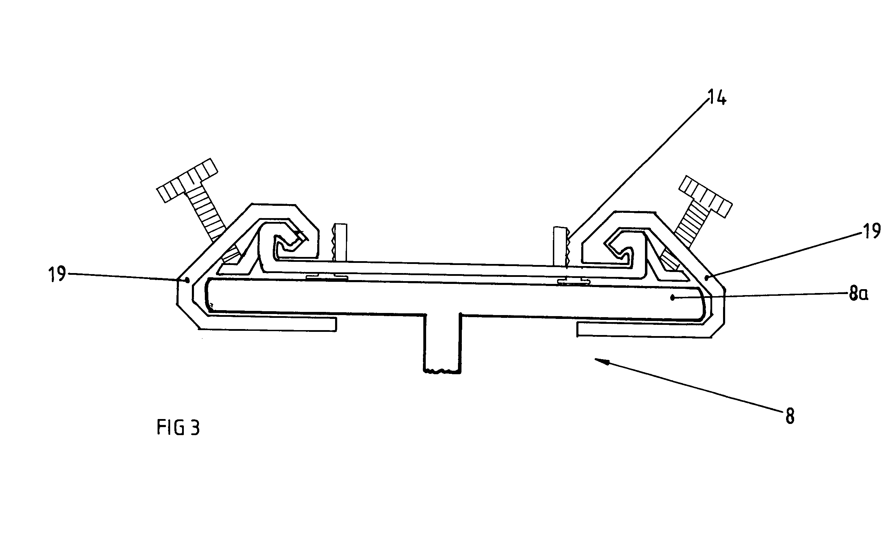

Fig. 3 den Längs schnitt durch das erfindungsgemäße Gestell mit den Krallen und Spannschrauben,

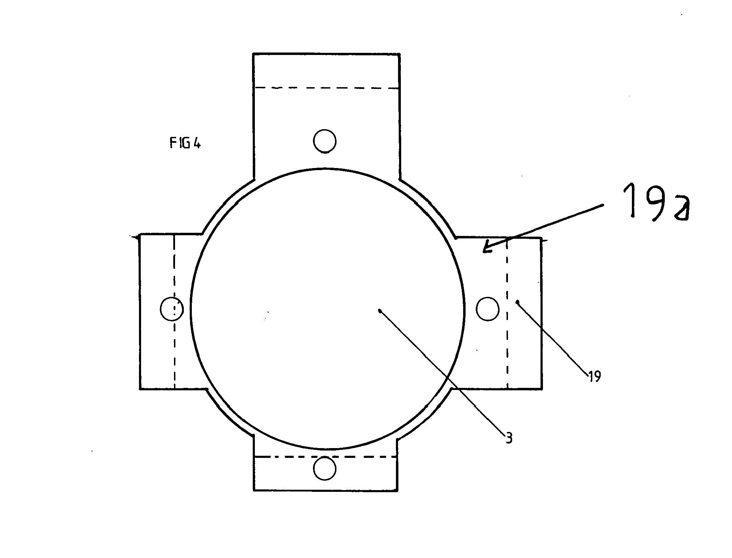

Fig. 4 die Draufsicht auf die Grundplatte des erfindungsgemäßen Gestells,

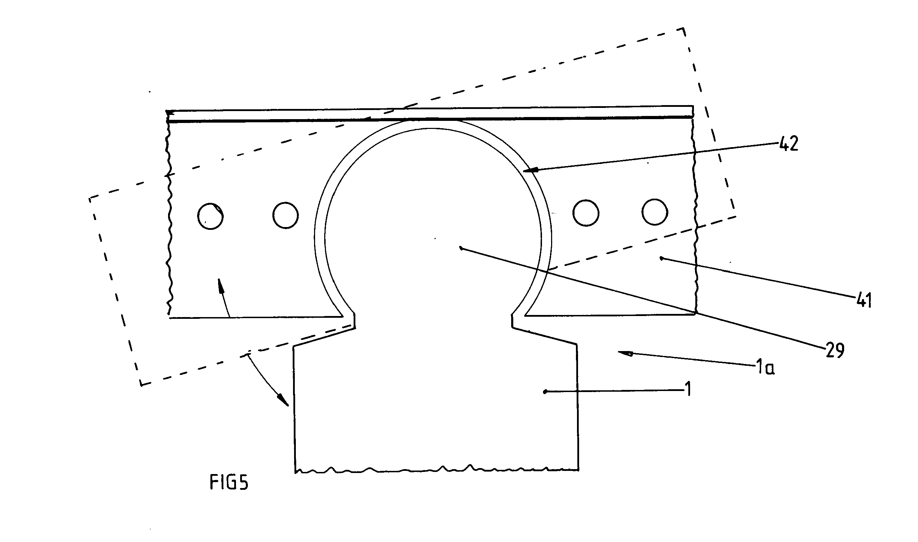

Fig. 5 den Längsschnitt durch die Kugelgelenkverbindung des erfindungsgemäßen Gestells,

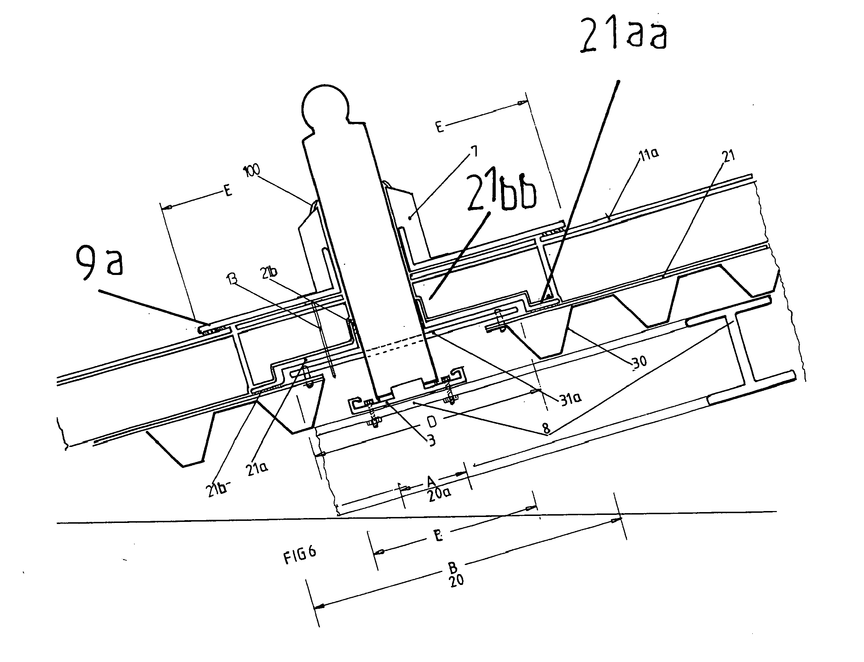

Fig. 6 den Längsschnitt durch das erfindungsgemäße Gestell und den T-Träger als Tragelement nach Verfahrensschritt h.,

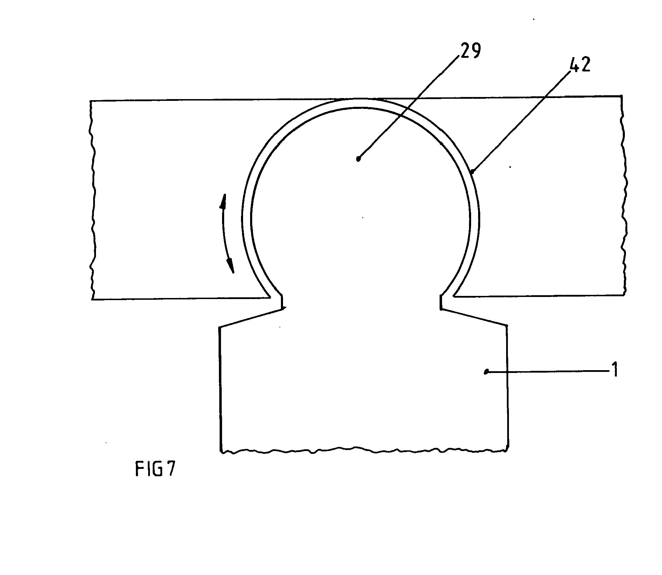

Fig. 7 den Längsschnitt durch die Kugelgelenkverbindung des erfindungsgemäßen Gestells,

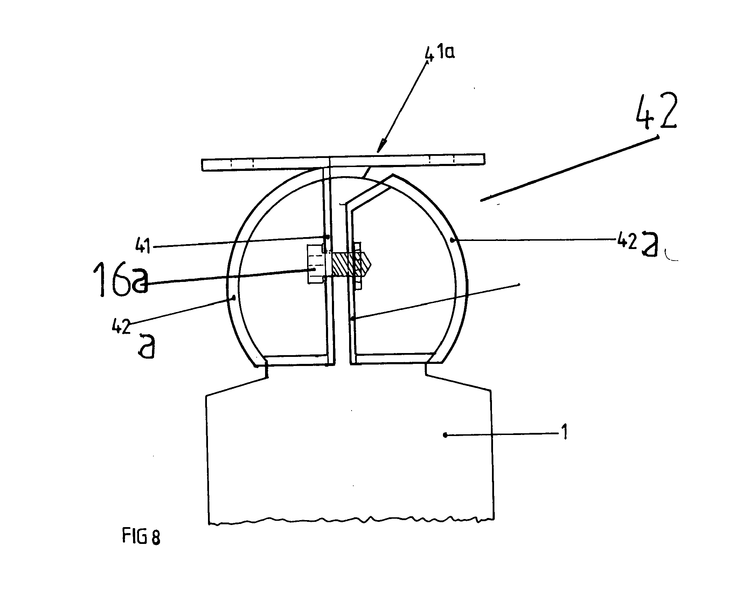

Fig. 8 die Längsschicht auf die Kugelgelenkverbindung des erfindungsgemäßen Gestells,

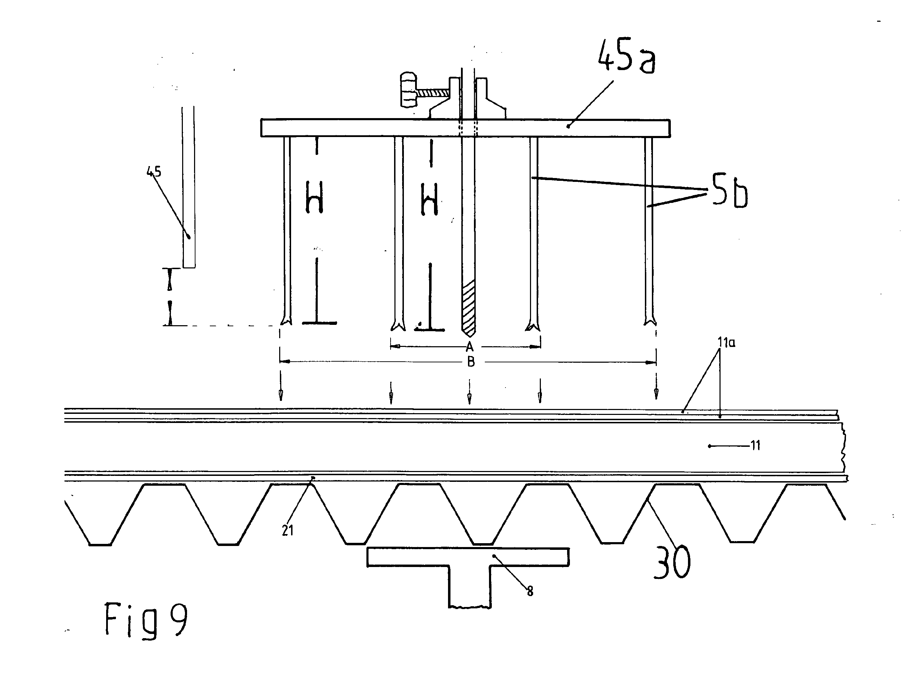

Fig. 9 den Längsschnitt durch die Dachschicht vor Verfahrensschritt a.,

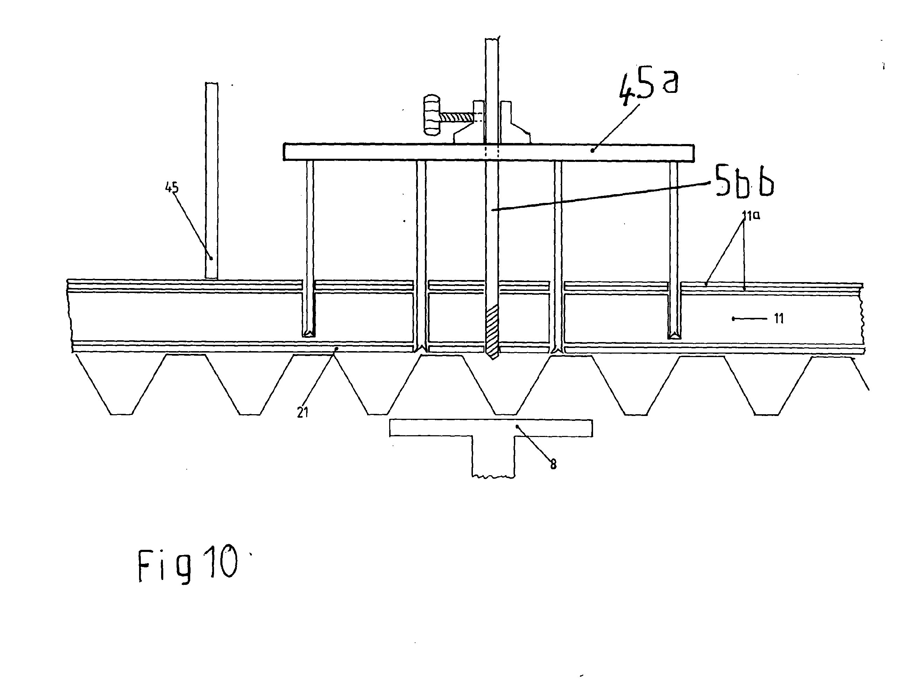

Fig. 10 den Längsschnitt durch die Dachschicht bei Fräsung bei Verfahrensschritt a.,

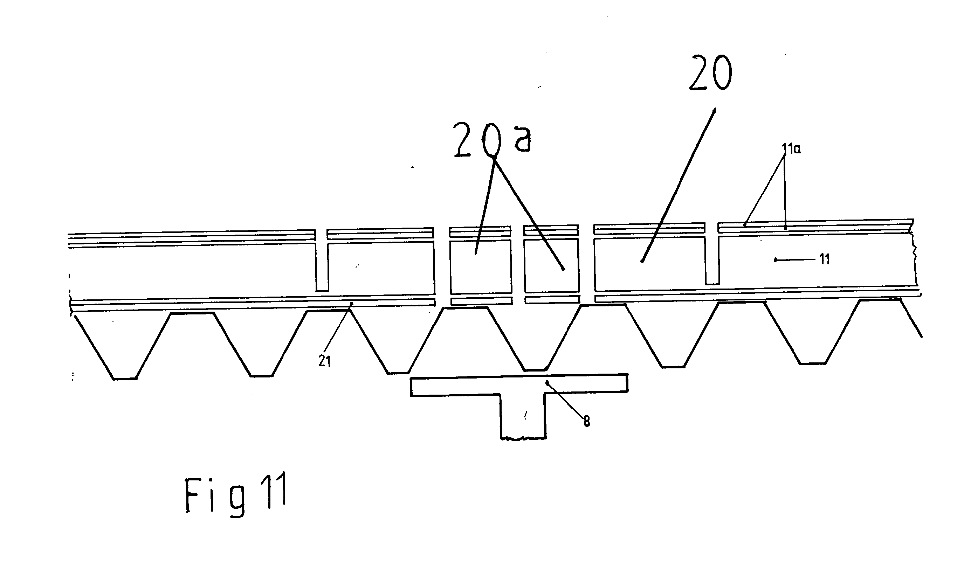

Fig. 11 den Längsschnitt durch die ausgefräste Dachschicht ,
Fig. 12 den Längsschnitt durch die ausgefräste Dachschicht mit Lochsägenfüllungen mit Draufsicht auf die Lochsägenfüllungen und Durchmesser A, B,

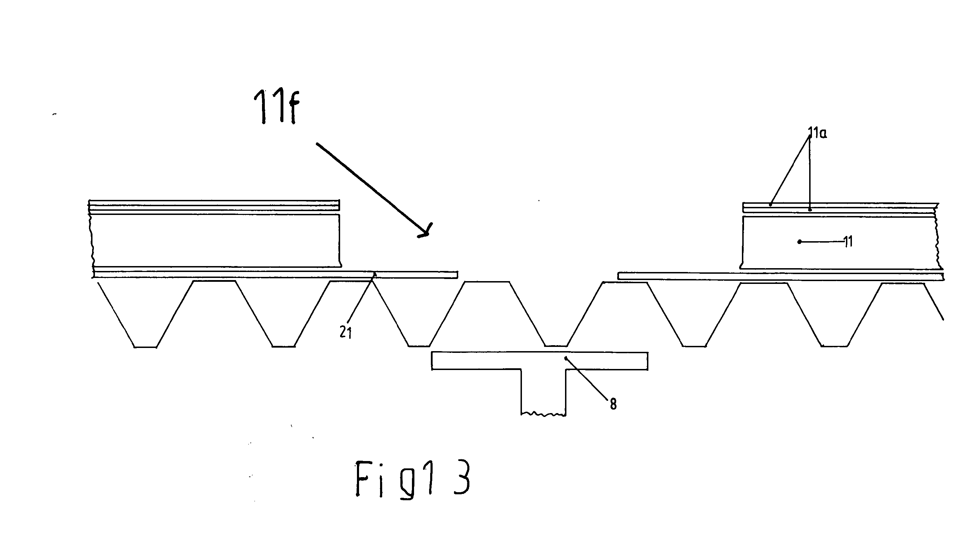

Fig. 13 den Längsschnitt durch die Dachschicht ohne Lochsägenfüllungen vor Verfahrensschritt b.,

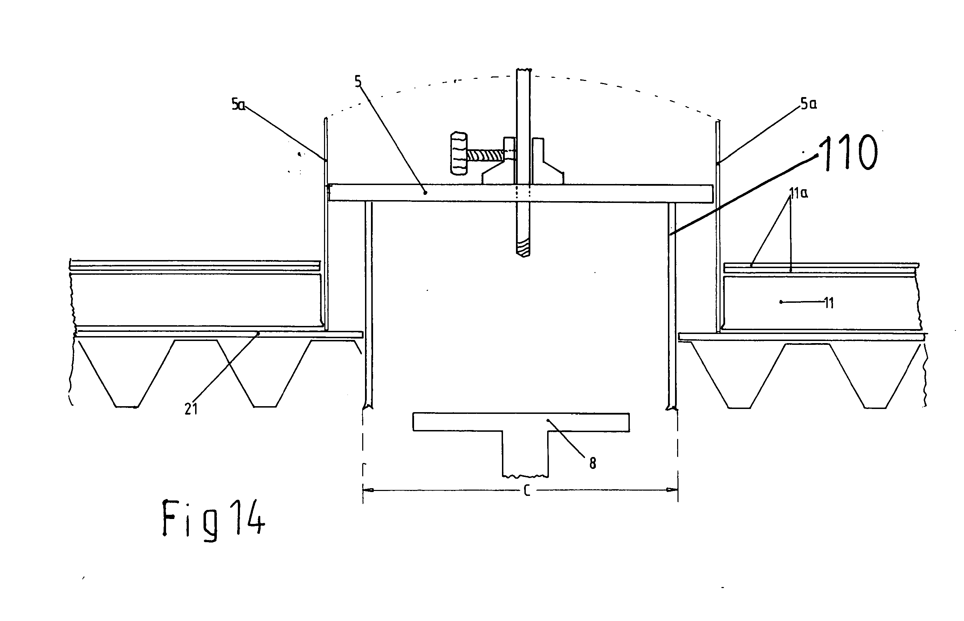

Fig. 14 den Längsschnitt durch die Dachschicht mit eingeführter Lochsägenblatt ohne Trapezblech bei Verfahrensschritt b.,

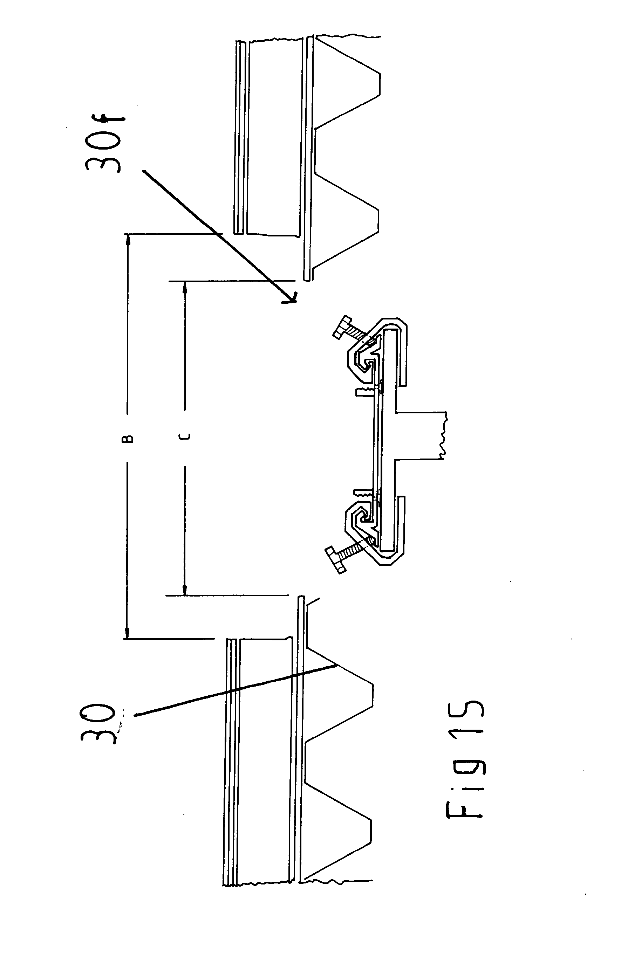

Fig. 15 den Längsschnitt durch die Dachschicht nach Verfahrensschritt c.,

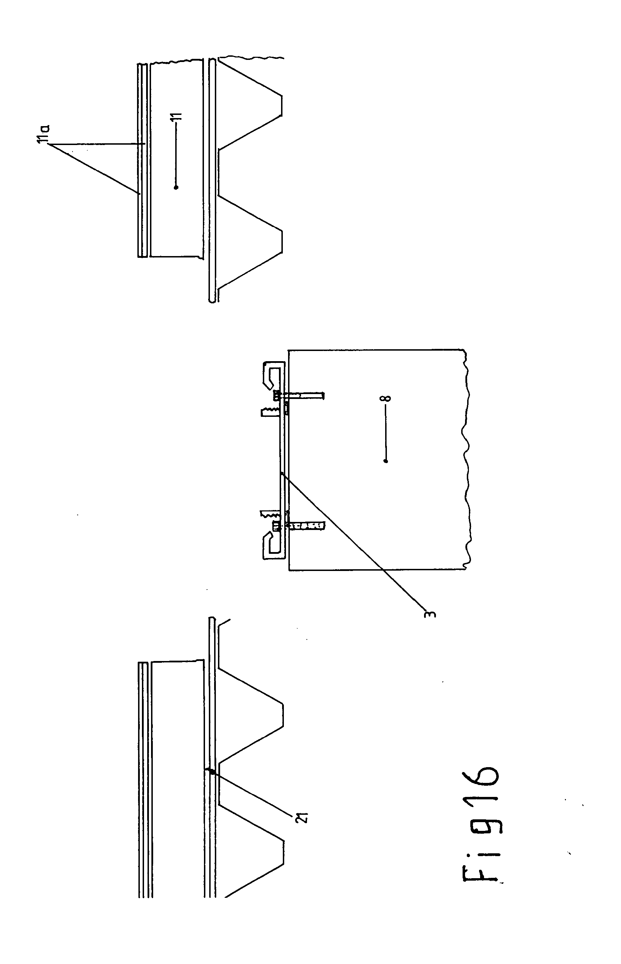

Fig. 16 den Längsschnitt durch die Dachschicht nach Verfahrensschritt c.,

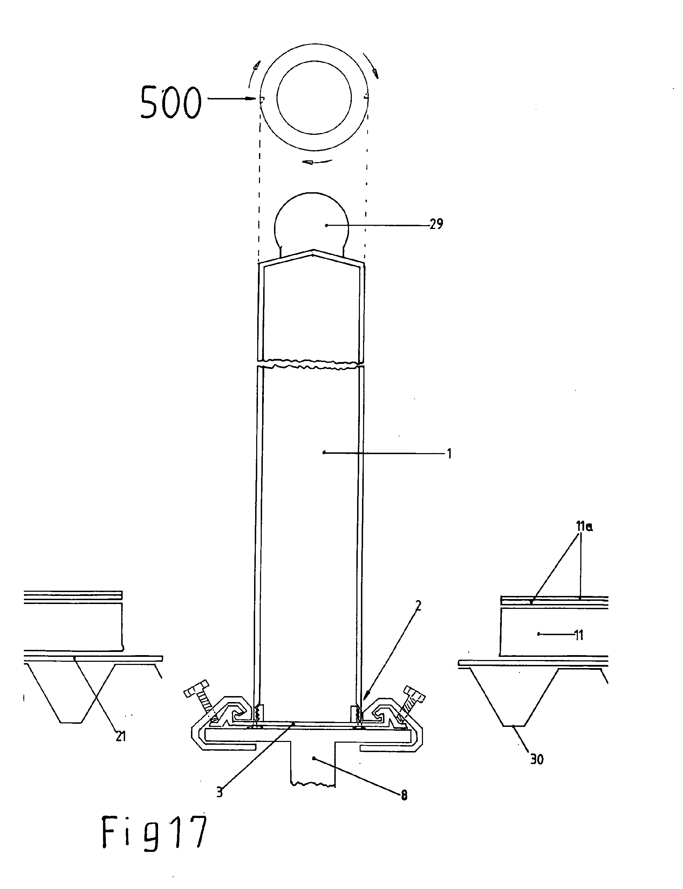

Fig. 17 den Längsschnitt durch die Dachschicht nach Verfahrensschritt d.,

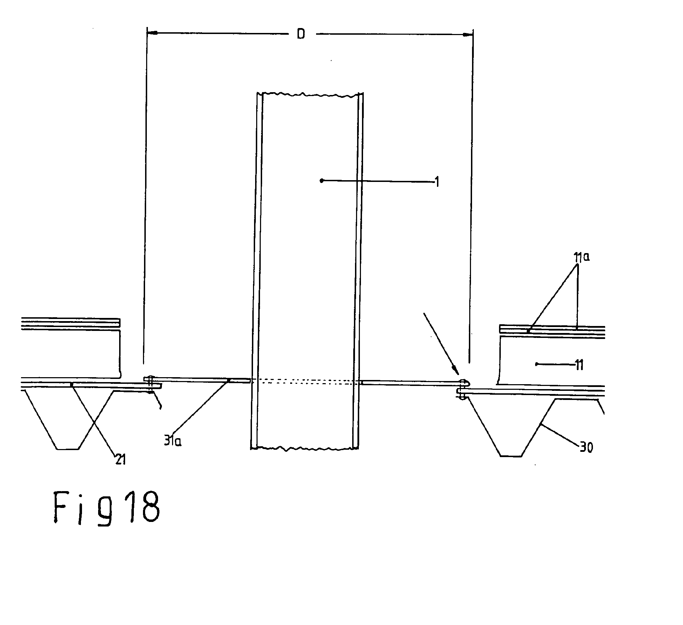

Fig. 18 den Längsschnitt durch die Dachschicht nach Verfahrensschritt e.

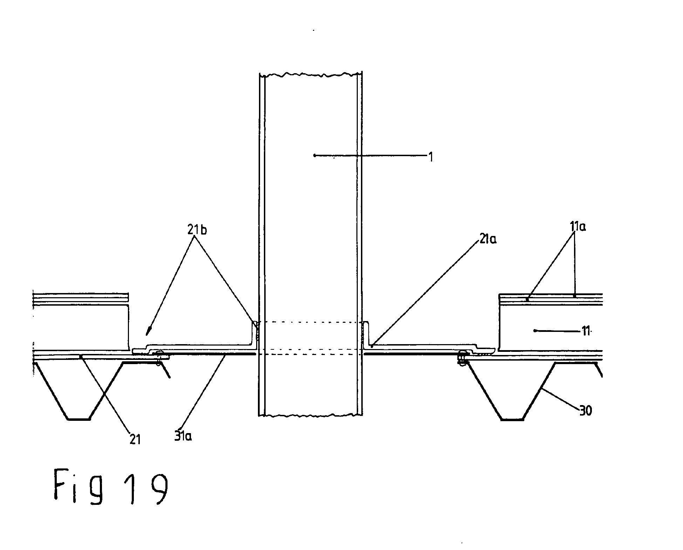

Fig. 19 den Längsschnitt durch die Dachschicht nach Verfahrensschritt f.,

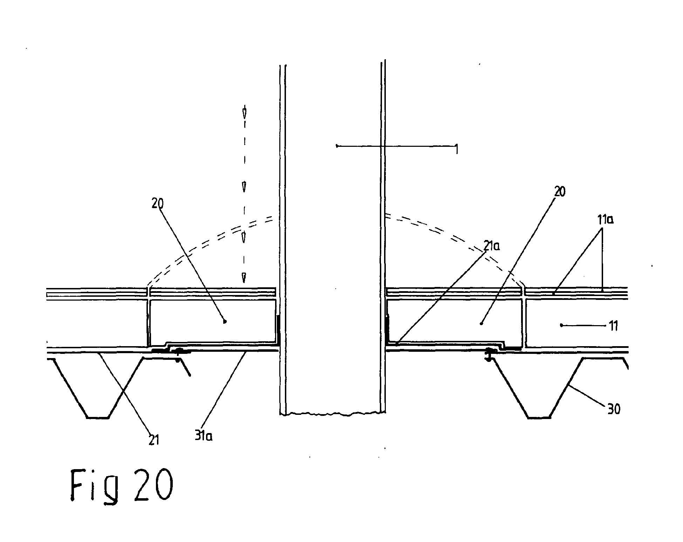

Fig. 20 den Längsschnitt durch die Dachschicht nach Verfahrensschritt g.,

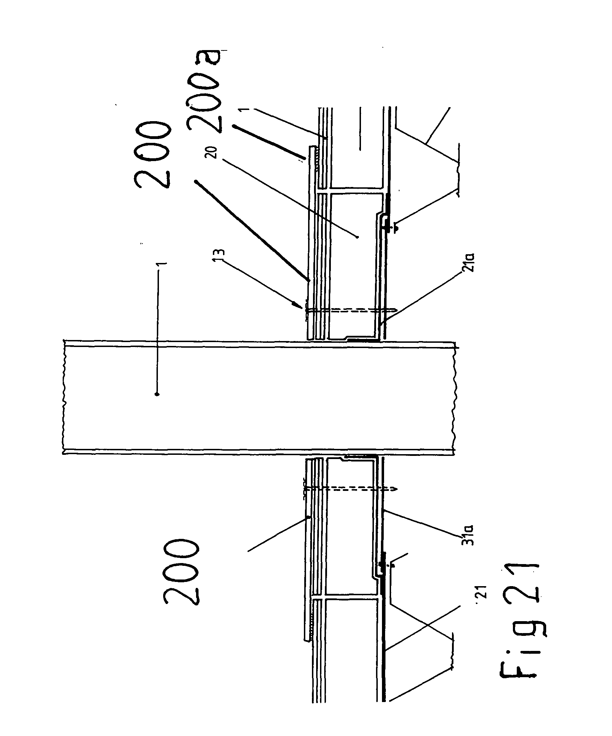

Fig. 21 den Längsschnitt durch die Dachschicht nach Verfahrensschritt i. und

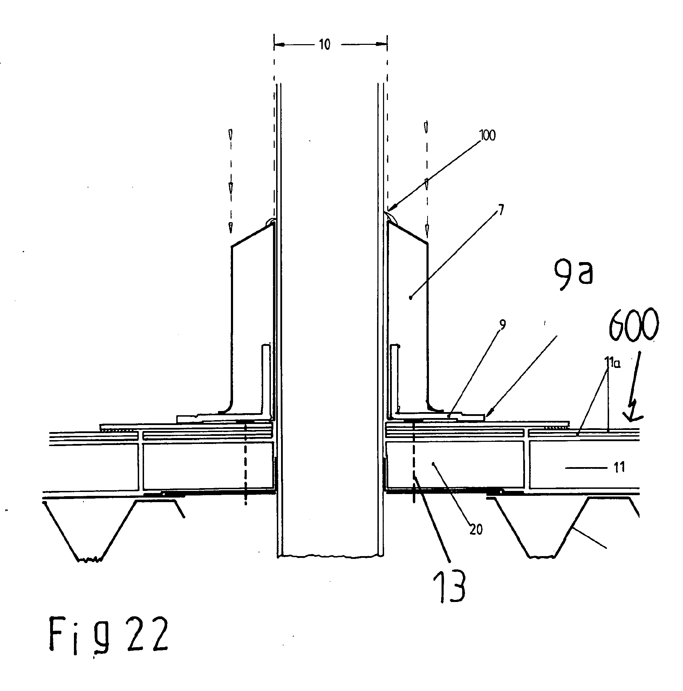

Fig. 22 den Längsschnitt durch die Dachschicht nach Verfahrensschritt j.. sowie

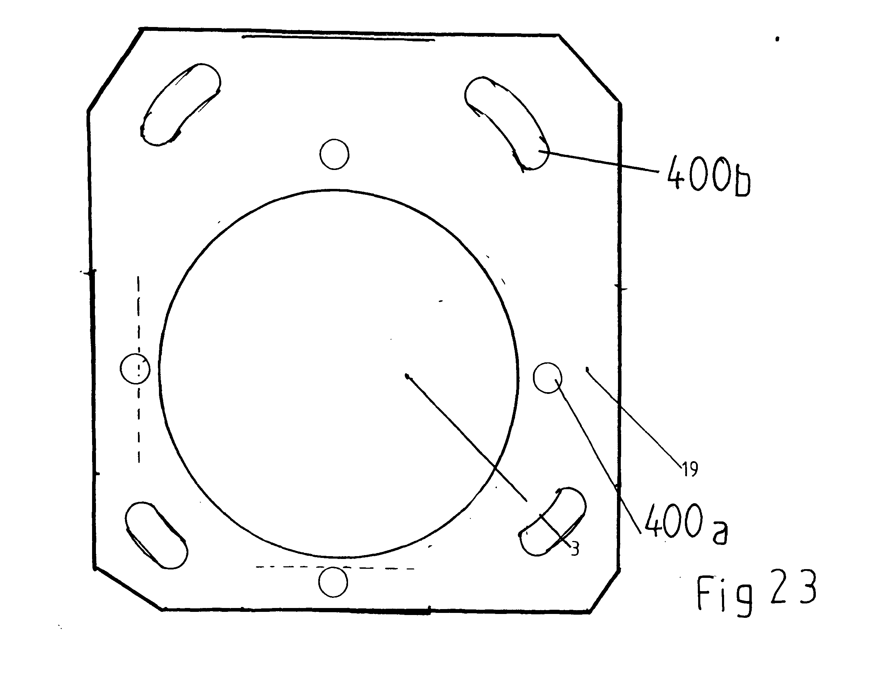

Fig. 23 die Draufsicht auf die Grundplatte des erfindungsgemäßen Gestells mit Langlöchern

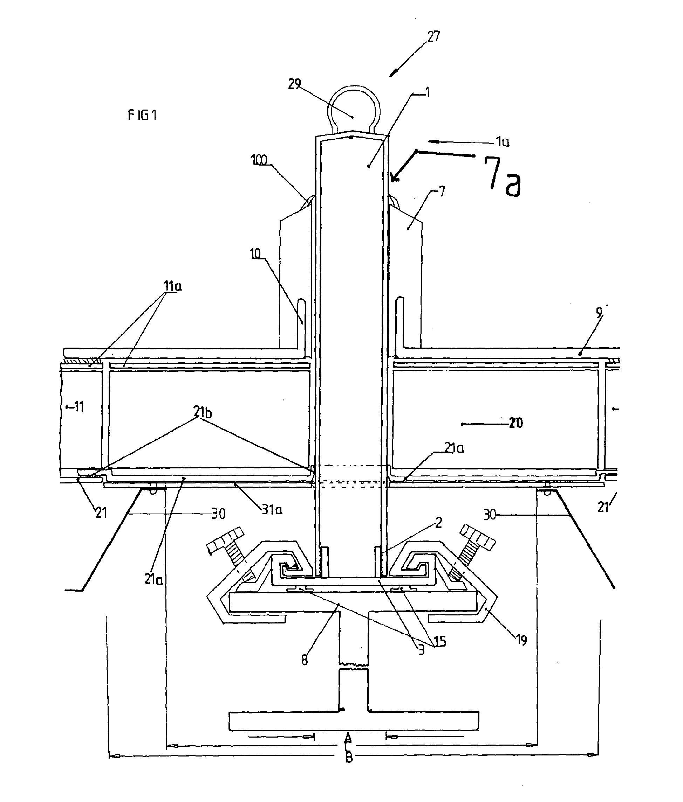

Das erfindungsgemäße Gestell umfasst in Arbeitsposition ein Stützrohr 1, dessen eine Ende 1e mit einer Grundplatte 3 gekoppelt ist. Auf der Oberseite 12 der Grundplatte 3 ist ein Kragen 14 angebracht, z.B. angeschweißt, welcher von dem einen Ende 1e des Stützrohrs 1 aufgenommen ist. Der Kragen 14 und das eine Ende des Stützrohrs 1 sind mittels einer herkömmlichen Verbindungseinrichtung 2, wie Verschraubung oder Schraubverbindung 2, einander gekoppelt. Der Kragen 14 hat ein Außengewinde. Das Stützrohr 1 ist mit seinem Innengewinde an die Grundplatte 3 lagesicher angezogen. Das eine Ende 1e stößt mit der Stirnseite flächig gegen die Oberseite der Grundplatte 3 (Fig. 1). Das eine Ende 1e des Stützrohres 1 ist mit dem Kragen 14 mit Hilfe von Verbindungsschrauben, wie Schraubverbindungen oder Spannschrauben, 16 fixiert. Zur Erhöhung der Ortsfestigkeit sind so in dem Kragen 14 und Stützrohr Schraubengewinde ausgefräst, die zur Aufnahme einer gemeinsamen Schraube zur Lagefixierung von Kragen 14 und Stützrohr 1 dienen.

Zu beiden Seiten der Grundplatte 3 sind schwenkbar zwei Vorsatzkrallen oder Krallen 19 angebracht. Die an Scharnieren 23 schwenkbar gelagerten Krallen 19 können zum Fixieren der Grundplatte 3 mit einem T-Träger als Tragelement 8, welches dem Trapezblech 30 benachbart ist, um den oberen Schenkel 8a des T-Trägers herumschwenken und diesen zwecks Erhöhung der Lagesicherheit untergreifen. Die Krallen 19 sind mit Hilfe von Spannschrauben 16 an dem Schenkel des T-Trägers fixiert. Als Krallen 19 eignen sich auch Vorsatzkrallen zum Fixieren der Grundplatte 3 mit einem T-Träger als Tragelement 8 eines Trapezblechdaches, welche einerseits den nach oben zu dem anderen Ende 1a des Stützrohrs abgewinkelten Rand der Grundplatte 3 hintergreifen und andererseits den oberen Schenkel des T-Trägers untergreifen. Die Krallen 19 werden mit Hilfe von Spannschrauben 16 an dem Schenkel des T-Trägers fixiert. Die Krallen sind an an der Grundplatte 3 angeformten Vorsatzarmen 19a beweglich gekoppelt. Zwecks lotrechter Ausrichtung des Stützrohres 1 ist die Unterseite der Grundplatte 3 mit Abstandhaltern 15 verbunden. Abstandhalter 15 können durch Lochungen 400a mit Innengewinde geführte Schrauben des selbsthemmenden Typs sein. Ebenso können die Schrauben 16 mit Hilfe von Splints gesichert werden. Zur weiteren genauen Ausrichtung der Grundplatte 3 sind bogenförmige Langlöcher 400b ausgefräst, in welchen Schrauben geführt sind, die die Feindrehung oder Feinjustierung der Grundplatte auf dem T- Träger als Tragelement ermöglichen.

Das Aufschrauben des Stützrohrs 1 auf das Gewinde des Kragens wird durch Einkerbungen 500, in welche Drehhebel oder sonstige herkömmliche Einschraubvorrichtungen eingreifen können, an dem anderen Ende 1a des Stützrohrs erleichtert.

Das erfindungsgemäße Gestell kann in einem Ausführungsbeispiel unterseitig eine Glattblech-Manschette 31 a mit oder ohne einer auf der Glattblech-Manschette 31a aufliegenden Manschette-Dampfsperrfolie 21a aufweisen, in weiteren Ausführungsbeispielen entweder die von der Glattblech-Manschette beabstandete Dämmstoffhülse 7 mit der Manschette 9 oder die von der von der Glattblech-Manschette beabstandete Zusatzmanschette 200, auf welcher die Dämmstoffhülse 7 mit der Manschette 9 aufliegt, umfassen. Über das Stützrohr 1 wird die Dämmstoffhülse 7 gezogen, indem das Stützrohr 1 verkantungsfrei durch den mittig in der Dämmstoffhülse angeordneten Hülsenkanal (nicht gezeigt) und der Öffnung der Manschette 9 hindurchgeführt wird.

Die Manschette 9 liegt auf die auf der Dachabdichtungsschicht 11 a und wird mit ihrem äußeren Randbereich 9a mit der Dachabdichtungsschicht 11a wasserdicht und dauerhaft mittels Butyl-Dichtbändern, verklebt wird, wobei der Durchmesser E der Manschette 9 größer als der Durchmesser B der äußeren Lochsägenfüllung 20 ist.

In einem weiteren Ausführungsbeispiel liegt die Dämmstoffhülse 7 mit der Manschette 9 auf der auf der äußeren Lochsägenfüllung 20 ruhenden Zusatzmanschette 200 und ist mit ihrem äußeren Randbereich 9a mit der Zusatzmanschette 200 wasserdicht verbunden. Die Zusatzmanschette 200 mit einem Außendurchmesser, welcher kleiner als der Durchmesser E der Manschette 9 ist, von der Glattblech-Manschette 31a mit einem Abstand A beanstandet, der der Schichtdicke der äußeren Lochsägenfüllung 20 entspricht. Die Zusatzmanschette ist mittels Langschrauben 13 mit der Glattblech-Manschette 31a verbunden. Die Lochsägenfüllung 200 wird von der Zusatzmanschette 200 oberseitig und von der Glattblech-Manschette 31a unterseitig begrenzt.

Der äußere Randbereich 200a der Zusatzmanschette 200 ist wasserdicht mit der Dachabdichtungsschicht 11a der Dachschicht 600 des Dachs verklebt. Die Glattblech-Manschette 31 a ist mittels Krallen mit der auf einem Tragelement ruhenden Einrichtung, einem T-Träger, verbunden, wobei die Glattblech-Manschette 31a einen Durchmesser D hat, der größer als der Durchmesser C des Trapezbleches 30 ist. Die Dämmstoffhülse 7 mit der Manschette (9) liegt auf der Zusatzmanschette 200 und ist mit ihrem äußeren Randbereich 9a mit der Zusatzmanschette (200) wasserdicht verbunden. Die Glattblech-Manschette 31a ist mittels Schraubverbindungen als Verbindungsvorrichtungen mit der auf einem Tragelement 8 ruhenden Einrichtung 30, Trapezblech, verbunden. Die Glattblech-Manschette 31 a hat einen Durchmesser D, der größer als der Durchmesser C der Trageinrichtung ist. Auf der Glattblech-Manschette 31 a liegt die Manschette-Dampfsperrfolie 21 a auf, welche mit der Stützrohr 1 und mit der Dampfsperre 21 der Dachschicht 600 des Dachs verbindbar ist.

Der die Öffnung der Manschette 9 begrenzende Rand 10 der Manschette 9 und der Hülsenkanal der Dämmstoffhülse 7 nimmt einen Teil des Stützrohrs 1 auf und die Manschette 9 gelangt zur Auflage auf der wasserdichten Dachabdichtungsschicht 11 a, mit welcher die Manschette 9 wasserdicht und dauerhaft verbunden, wie verklebt oder verschweißt ist. Zur Verbindung der Manschette 9 mit dem Material der wasserdichten Dachabdichtungsschicht 11a eignen sich Klebebändern, insbesondere Butyl-Dichtbändern. Auch die Manschette 9 ist mit der Dämmstoffhülse 7 und / oder dem Stützrohr 1 mittels Klebebändern, insbesondere Butyl-Dichtbändern, dichtend verklebt.

Das Stützrohr 1 ist mit seinem anderen Ende 1a mittels der Gelenkeinrichtung 27 an der an Dachaufbauten über ein oberseitiges Auflager 41 a koppelbaren Lochplatte 41 zur Einstellung der Neigung der Lochplatte 41 zu dem Stützrohr (1) gekoppelt. Die Lochplatte 41 ist zur Kopplung an Dachaufbauten vorgesehen, indem die Gelenkeinrichtung 27 als ein Kugelgelenk mit einem Kugelkopf 29 und einer die Kugelkopf 29 aufnehmenden Kugelkopfhülse 42 ausgestaltet ist. Die Kugelkopfhülse 42 ist mit der Lochplatte 41 verbunden. Die Kugelkopfhülse 42 umfasst zwei annähernd halbkugelschalenartige Kopfhülsenteile 42a, welche mittels Spannschrauben 16a lösbar miteinander verbunden sind. Durch Zusammenwirken der Kugelkopfhülse 42 mit dem Kugelkopf 29 kann die Neigung der Lochplatte 41 gegenüber zum Beispiel dem Stützrohr 1, der Dachschicht, Tragelement usw. eingestellt und durch Reib-, Form- und / oder Kraftschluss fixiert werden. Die Grundplatte 3 und die Lochplatte 41 sind in der Draufsicht kreisrund oder eckig platten- oder scheibenförmig ausgebildet. Das Zusammenwirken von Kugelkopf 29 mit den zwei Hülsenteilen 42a der Kugelkopfhülse 42 mit der Lochplatte 41 ermöglicht gleichfalls die jederzeitige Justierung oder feinjustierung der Lage der Lochplatte mit den Dachaufbauten relativ zu dem Stützrohr.

Mit Hilfe des erfindungsgemäßen Verfahrens wird ein Durchbruch durch das Flachdach, welches unter anderem eine Dämmstoffschicht 11 und eine unter der Dämmstoffschicht 11 angeordnete Dachabdichtungsschicht 11 a umfasst, mit Hilfe von zwei Lochsägenblättern 5b einer Lochsäge 5 herausgefräst in einem einzigen Arbeitsgang herausgefräst. Durch die zwei an dem Lochsägenhalter 45a befestigten Lochsägenblätter 5b unterschiedlicher Durchmessers A, B werden zwei in der Draufsicht kreisbogenförmige Lochsägenfüllungen 20a (innere Lochsägenfüllung), 20 (äußere Lochsägenfüllung), welche Dämmmaterial der Dämmstoffschicht 11 und die Dachabdichtungsschicht 11a enthalten, ausgefräst und entnommen.
Hierbei werden in einem Arbeitsschritt a. mittels der zwei einander gekoppelten an einem Lochsägenhalter 45a gekoppelter Lochsägenblätter 5 5b mit ringförmigen Sägeblätter mit unterschiedlichen Durchmessern ein großer Durchbruch bestehend aus einem Durchbruch mit dem Durchmesser A, der der lichten Weite A desselben entspricht, aus einer eine Dämmstoffschicht 11 und einer Dachabdichtungsschicht 11 a umfassenden Dachschicht des Dachs zur Bereitstellung von einer zu verwerfenden, sogenannten inneren, Lochsägenfüllung 20a und einem weiteren Durchbruch mit dem Durchmesser B, der der lichten Weite B desselben entspricht, aus der die Dämmstoffschicht 11 und die Dachabdichtungsschicht 11 a umfassenden Dachschicht des Dachs zur Bereitstellung von einer Lochsägenfüllung 20 ausgefräst und diese entnommen.

Anschließend wird in dem Verfahrensschritt b. mittels eines Lochsägeblattes 110 ein Durchbruch 30f mit einem Durchmesser C, der der lichten Weite C desselben entspricht, aus der Dampfsperre 21 und einem Trapezblech 30 ausgefräst, wobei der Durchmesser C als Durchmesser C oder Außendurchmesser C des Trapezbleches bezeichnet wird. Die Fräsung kann durch eine herkömmliche Rohrhülse 5a mit dem Durchmesser B und / oder einen Zentrierbohrer 5bb als Zentrierhilfe unterstützt werden. Die Lochsägen haben eine Schnittbreite z.B. von 22. Die äußere Lochsäge kann mit einem Tiefenschlag 45 versehen werden zur Verhinderung von Beschädigungen der Dampfsperre im Verfahrensschritt a. Die Rohrhülse 5a kann als Zentrierhilfe für die Lochsäge 110 mit dem -halter 5 dienen im Verfahrensschritt b.

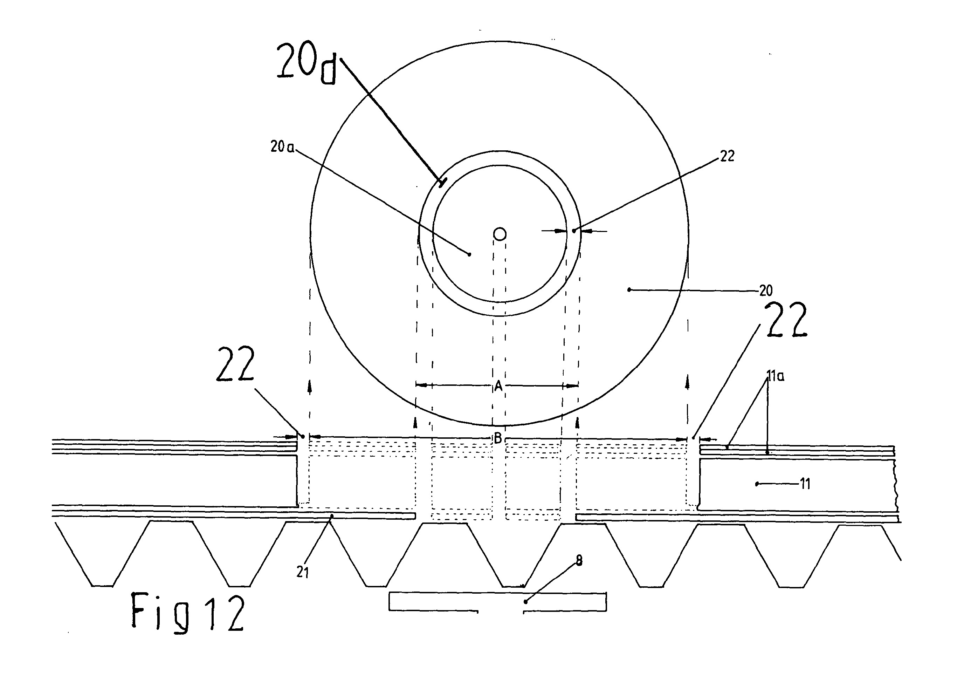

Die in den Abbildungen als Seitenansicht dargestellten Durchmesser, wie A, B, C, D, E, können mit den Durchmessern, wie A, B, C, D, E, in der Draufsicht (Fig. 12 gezeigt) überein. Unter Durchmesser A kann im Sinne der Erfindung auch verstanden werden der Außendurchmesser A der inneren Lochsägenfüllung 20a ohne Schnittbreite 22 der Lochsäge 5b oder der Außendurchmesser A der inneren Lochsägenfüllung 20a mit der Schnittbreite 22 als die lichte Weite des Innenlochs 20d der Lochsägenfüllung 20.
Unter Durchmesser B kann im Sinne der Erfindung auch verstanden werden der Außendurchmesser B der äußeren Lochsägenfüllung 20 ohne Schnittbreite 22 der Lochsäge 5b oder der Außendurchmesser B der äußeren Lochsägenfüllung 20 mit der Schnittebreite 22, die der lichten Weite des ausgefrästen Durchbruchs 11f in der Dämmstoffschicht 11 entsprechen kann.
Unter Durchmesser C des Trapezbleches 30 kann im Sinne der Erfindung auch verstanden werden die lichte Weite C des ausgefrästen Durchbruchs 30f in dem Trapezblech 30 nach Verfahrensschritt b. Unter Außendurchmesser D kann im Sinne der Erfindung auch verstanden werden der Durchmesser D der, z.B. scheibenförmigen, Glattblech-Manschette 31a in Draufsicht; unter Außendurchmesser E kann im Sinne der Erfindung auch verstanden werden der Durchmesser E der, z.B. scheibenförmigen, Manschette 9 in Draufsicht. Der Außendurchmesser E, auch Durchmesser E genannt, der scheibenförmigen Zusatzmanschette 200 in Draufsicht kann gleich oder größer als der Außendurchmesser E der Manschette 9 und / oder D der Glattblech-Manschette sein, er kann ebenso kleiner als der Außendurchmesser E der Manschette sein und größer als der Durchmesser B der äußeren Lochsägenfüllung 20 sein. Der Außendurchmesser D der scheibenförmigen Glattblech-Manschette 31a in Draufsicht kann gleich oder größer als der Durchmesser C oder A sein, er kann ebenso gleich oder kleiner Durchmesser B sein. Der Außendurchmesser E kann größer als der Außendurchmesser D oder Durchmesser B sein. Der Außendurchmesser D kann gleich, kleiner oder größer als der Durchmesser B sein. Der Durchmesser B kann größer als der Durchmesser C oder A sein. Der Durchmesser C kann größer als der Durchmesser A sein.

Mit Hilfe des erfindungsgemäßen Verfahrens wird die Grundplatte 3 durch den Durchbruch 30f hindurchgeführt und mit dem Tragelement 8, vorzugsweise einem Binder, des Dachs mit Hilfe von Verbindungsvorrichtungen 19 fest verbunden. Dann wird das eine Ende 1e des Stützrohrs 1 durch den Durchbruch 30f hindurchgeführt und mit der Grundplatte 3 mit Hilfe einer herkömmlichen Verbindungseinrichtung 2 verbunden, vorzugsweise auf diese aufgeschraubt. Anschließend wird über das eine Ende 1e des Stützrohrs 1 die äußere Lochsägenfüllung 20 geführt.

In einem weiteren Ausführungsbeispiel wird statt des Auflegens der äußeren Lochsägenfüllung 20 zuvor über das Stützrohr 1 eine Glattblech-Manschette 31a geführt und die Glattblech-Manschette 31a mit dem Trapezblech 30 mittels Verbindungsvorrichtungen verbunden; die Glattblech-Manschette 31a hat einen Außendurchmesser D, der größer als der Durchmesser C und kleiner als Durchmesser B sein kann. Anschließend wird über das Stützrohr 1 eine Manschette-Dampfsperrfolie 21 a mit ihrer Öffnung, welche Manschette-Dampfsperrfolie einen Außendurchmesser B oder Durchmesser B in der Draufsicht hat, der dem Durchmesser B äußeren Lochsägenfüllung 20 entsprechen kann, geführt, welche mit ihrem äußeren Randbereich 21 aa mit der Dampfsperre 21 der Dachschicht des Dachs und mit ihrem inneren Randbereich 21bb mit dem Stützrohr 1, z.B. mittels Butyl-Dichtbändern, wasserdicht verklebt wird. Anschließend wird über das eine Ende 1e des Stützrohrs 1 die äußere Lochsägenfüllung 20, welche die Dämmstoffschicht 11 und Dachabdichtungsschicht 11 a umfasst, mit ihrem Innenloch 20d geführt und auf die Dampfsperrfolie 21a gelegt.

Die Dämmstoffhülse 7 wird anschließend mit ihrer Manschette 9 aufgebracht, so dass die Manschette 9 auf der Dachabdichtungsschicht 11a zum Aufliegen gebracht wird. Die Manschette 9 hat einen Außendurchmesser E, der größer als der Durchmesser B der äußeren Lochsägenfüllung 20 sein kann. Die Manschette 9 wird mit ihrem äußeren Randbereich 9a mit der Dachabdichtungsschicht 11a, z.B. mittels Butyl-Dichtbändern, wasserdicht verklebt. Die Dämmstoffhülse 7 liegt in dem oberen Bereich mit ihren Dichtlippen 100 gegen das Stützrohr 1 an. In Draufsicht ist die mittige Öffnung der Manschette 9 umlaufend begrenzt von einem Rand 10. Der Rand ist in Richtung hin zu den Dichtlippen 100 ausgerichtet und auf der Manschette 9 aufrecht stehend. Der Rand 10 ist ein Rohr, wie Vierkant- oder Rundrohr.

In einem weiteren Ausführungsbeispiel kann der Rand 100 die Öffnung der Manschette 9 unterbrochen verlaufend begrenzen. Der Rand 100 ist derart von dem Dämmmaterial der Dämmstoffhülse 7 eingeschäumt, dass er von derselben aufgenommen ist. Zudem kann die Manschette 9 mittels Verbindungseinrichtungen 13, 16, z.B. Langschrauben, mit der Glattblech-Manschette 31a als Randfixierung, z.B. gemäß FDRL, verbunden sein für eine hinreichende Fixierung der Dämmstoffhülse und Lagestabilität derselben.

In einem weiteren Ausführungsbeispiel wird nach dem Auflegen der Lochsägenfüllung 20 auf die Manschette-Dampfsperrfolie 21a entweder die Dämmstoffhülse 7 mit ihrer Manschette 9 gegen eine oder mehrere Dachabdichtungsschichten 11 a zum Aufliegen gebracht und die Manschette 9 mit ihrem äußeren Randbereich 9a mit der Dachabdichtungsschicht 11a wasserdicht und dauerhaft, z.B. mittels Butyl-Dichtbändern, verklebt oder eine Zusatzmanschette 200 wird über das Stützrohr 1 geführt, um zum Auffliegen auf der Lochsägenfüllung 20, welche die Dämmstoffschicht 11 und eine oder mehrere Dachabdichtungsschichten 11 a umfasst, zu gelangen. Dann wird sie mittels Verbindungsvorrichtungen, wie Langschrauben 13, mit der Glattblech-Manschette 31 a verbunden. Die Zusatzmanschette 200 hat einen Außendurchmesser E, welcher kleiner oder größer als der Außendurchmesser E der Manschette 9 oder gleich dem Außendurchmesser E sein kann. Der Außendurchmesser der Zusatzmanschette 200 kann auch größer als der Durchmesser B der äußeren Lochsägenfüllung oder Durchmesser C des Trapezbleches sein. Ihr äußerer Randbereich 200a wird wasserdicht und dauerhaft mit der Dachabdichtungsschicht 11a mittels Butyl-Dichtbändern verklebt, wenn z.B. der Außendurchmesser E der Zusatzmanschette 200 größer als der Durchmesser B der äußeren Lochsägenfüllung ist. Anschließend wird über das Stützrohr 1 die Dämmstoffhülse 7 mit ihrer Manschette 9 geführt. Die Manschette 9 liegt gegen die Zusatzmanschette 200 an. Ihr äußerer Randbereich 9a ist mit der Zusatzmanschette 200, z.B. mittels Butyl-Dichtbändern, wasserdicht, verklebt, wenn der Außendurchmesser der Zusatzmanschette 200 größer als der Durchmesser E der Manschette ist. Der äußere Randbereich 9a der Manschette ist mit der Zusatzmanschette 200 und / oder mit der Dachabdichtungsschicht 11a, z.B. mittels Butyl-Dichtbändern, wasserdicht verklebt, wenn der Außendurchmesser der Zusatzmanschette 200 kleiner als der Durchmesser E der Manschette ist. Die Dämmstoffhülse 7 liegt zudem mit ihren Dichtlippen 100 gegen das Stützrohr 1 an.

In einem weiteren Ausführungsbeispiel kann das Stützrohr 1 mit einer Schrägstrebe zur diagonalen Verstrebung des Stützrohrs 1 mit einem Tragelement 8 verbunden werden, um besonders starken Windlasten zu trotzen.

Da das erfindungsgemäße Gestell und das erfindungsgemäße Verfahren lediglich das Ausfräsen eines Durchbruchs bzw. von zwei Durchbrüchen 11f, 30f mit Hilfe von Lochsägen erforderlich macht, die Kopplung der Grundplatte 3 mit Hilfe von bereits an derselben montierten Krallen 19 oder Vorsatzkrallen 19 und Spannschrauben 16a, 16 mit dem Tragelement 8 durchzuführen ist, das Stützrohr 1 durch Aufschrauben an die Grundplatte und Anziehen desselben geringe Anforderungen an die Geschicklichkeit des Benutzers stellt, werden auch geringere Anforderungen an die Bereitstellung von Werkzeug und Gerüsten gestellt.

Da das erfindungsgemäße Verfahren sich vorteilhafterweise auf das Herausfräsen des Durchbruchs, die Kopplung der Grundplatte 3 an Tragelement 8, das Aufschrauben des Stützrohrs 1 an die Grundplatte 3, die Kopplung der Dachaufbauten mit der Lochplatte und die Einstellung des Neigungswinkels der Dachaufbauten gegen das Stützrohr 1 bzw. Dacheindeckungselement beschränkt, kann die Montage des erfindungsgemäßen Gestells auch standardisiert ablaufen, so dass vormontierte Teile des erfindungsgemäßen Gestell bereitgestellt und lediglich vor Ort zusammengefügt zu werden sind.

Aufgrund der Einfachheit der Einstellbarkeit der Lage der Dachaufbauten eignet sich das erfindungsgemäße Gestell auch für Dachaufbauten jeglichen Dachtyps. Hinzutretend werden Spalte zwischen dem Stützrohr und der Dämmstoffschicht bzw. zwischen dem Stützrohr und dem Dach in hinreichender Weise abgedichtet sowohl gegen Eindringen von Feuchtigkeit wie auch gegen Auftreten von Kältebrücken, so dass im Gegensatz zum Stand der Technik umfangreiche Vorsorgemaßnahmen bezüglich Vermeidung von Wasserkapillarbrücken und von Wärmeenergieverlusten nicht durchzuführen sind.

Da die Grundplatte 3 sich für jeglichen Typ von Tragelementen eignet, soweit diese beispielsweise eine horizontale ausgerichtete Tragfläche zur Auflastung der Grundplatte aufweisen, ist die Einsetzbarkeit des erfindungsgemäßen Gestells unabhängig von den Tragelementen. Ebenso macht das erfindungsgemäße Verfahren nicht die Verwendung von Spezialwerkzeugen erforderlich. Das erfindungsgemäße Gestell zeichnet sich auch durch eine hinreichende Lagestabilität nicht nur der Stützrohre sondern auch der über die Lochplatte an das Stützrohr gekoppelten Dachaufbauten aus, unabhängig ob Windsog und Winddruck, die auf die Dachaufbauten einzuwirken vermögen.

### Bezugszeichenliste

- 1: Stützrohr
- 1a: anderes Ende von Stützrohr
- 1e: ein Ende von Stützrohr
- 2: Verbindungseinrichtung
- 3: Grundplatte
- 5: Lochsägen
- 5a: Rohrhülse
- 5b: Sägeblätter
- 5bb: Zentrierbohrer
- 7: Dämmstoffhülse
- 7a: Lochung von Dämmstoffhülse
- 8: Tragelement
- 8a: Schenkel von Tragelement
- 9: Manschette
- 9a: äußerer Randbereich der Manschette
- 10: Rand
- 11: Dämmstoffschicht
- 11 a: Dachabdichtungsschicht
- 11f: Durchbruch
- 12: Oberseite der Grundplatte
- 13: Langschrauben
- 14: Kragen
- 15: Abstandshalter
- 16: Verbindungsvorrichtung
- 16a: Spannschrauben
- 19: Krallen, Vorsatzkrallen
- 19a: Vorsatzarme
- 19: Verbindungsvorrichtung
- 20: Lochsägenfüllung
- 20a: Lochsägenfüllung
- 20d: Innenloch
- 21: Dampfsperre
- 21 a: Manschette-Dampfsperrfolie
- 21aa: äußerer Randbereich der Manschette-Dampfsperrfolie
- 21bb: innerer Randbereich der Manschette-Dampfsperrfolie
- 21b: Butyl-Dichtbänder
- 22: Schnittbreite
- 23: Scharniere
- 27: Gelenkeinrichtung
- 29: Kugelkopf
- 30: Trapezblech
- 30f: Durchbruch
- 31 a: Glattblech-Manschette
- 42: Kugelkopfhülse
- 42a: Hülsenteile der Kugelkopfhülse
- 41: Lochplatte
- 41a: Auflager
- 45: Tiefenschlag
- 45a: Lochsägenhalter
- 100: Dichtlippe der Dämmstoffhülse
- 110: Lochsägenblatt
- 200: Zusatzmanschette
- 200a: äußerer Randbereich der Zusatzmanschette
- 400a: Lochungen
- 400b: Langloch
- 500: Einkerbungen
- 600: Dachschicht

## Patentansprüche

1. Leicht handhabbares Gestell zur Kopplung von Dachaufbauten, insbesondere von Sonnenkollektoren, an Dachtragwerken von Dächern, vorzugsweise Flachdächern, mit welchem sich die Lage der Dachaufbauten gegenüber Dachschichten oder Dacheindeckungselementen verstellen und festlegen lässt, **dadurch gekennzeichnet, dass** ein Stützrohr (1) mit seinem einen Ende (1e) mittels einer Verbindungseinrichtung (2) an eine Grundplatte (3) gekoppelt ist, das andere Ende (1a) des Stützrohrs (1) mittels einer Gelenkeinrichtung (27) an eine an Dachaufbauten koppelbare Lochplatte (41) zur Einstellung der Neigung der Lochplatte (41) zu dem Stützrohr (1) gekoppelt ist, eine Manschette (9) zumindest einen Teil des Stützrohrs (1) aufnimmt, eine eine Lochung (7a) aufweisende Dämmstoffhülse (7) zumindest einen Teil des Stützrohrs
(1) und der Manschette (9) aufnimmt und die Grundplatte (3) mittels Verbindungsvorrichtungen zur Kopplung an ein Tragelement (8) eines Dachtragwerks des Dachs geeignet ist.

2. Leicht handhabbares Gestell nach Anspruch 1, **dadurch gekennzeichnet, dass** die Dämmstoffhülse (7) in ihrem oberen dem anderen Ende (1a) zugewandten Bereich als eine Dichtlippe (100) zum dichtenden Anliegen an der Außenseite des Stützrohrs (1) ausgebildet ist, die Dichtlippe (100) mit einem elastischen Material hergestellt ist, die Manschette (9) mit einer Öffnung ausgebildet ist, deren Öffnung von einem in Richtung zu Dichtlippen (100) der Dämmstoffhülse (7) hin ausgerichteten hervorkragenden Rand (10) begrenzt ist, welcher Rand (10) von der Dämmstoffhülse (7) aufgenommen ist, der die Öffnung der Manschette (9) begrenzende Rand (10) der Manschette (9) einen Teil des Stützrohrs (1) aufnimmt und die Manschette (9) zur Auflage auf einer wasserdichten Dachabdichtungsschicht (11a) geeignet ist und mit der wasserdichten Dachabdichtungsschicht (11a) der Dachschicht des Dachs wasserdicht und dauerhaft verklebbar oder verschweißbar ist, die Dämmstoffhülse (7) mit ihrer Manschette (9) zum Anliegen gegen die Dachabdichtungsschicht (11a) geeignet ist, welche Manschette (9) mit ihrem äußeren Randbereich (9a) mit der Dachabdichtungsschicht (11a) wasserdicht und dauerhaft verklebbar oder verschweißbar ist, das eine Ende (1e) des Stützrohrs (1) mittels einer Schraubverbindung als Verbindungseinrichtung (2) mit der Grundplatte (3) verbunden ist.

3. Leicht handhabbares Gestell nach mindestens einem der vorhergehenden Ansprüche, **dadurch gekennzeichnet, dass** die Gelenkeinrichtung (27) ein Kugelgelenk mit einem Kugelkopf (29) und einer die Kugelkopf (29) aufnehmenden Kugelkopfhülse (42) ist, wobei die Kugelkopfhülse (42) mit der Lochplatte (41) fest verbunden ist, die Kugelkopfhülse (42) mit zwei halbkugelschalenartigen Hülsenteilen (42a) ausgestaltet ist, welche mittels Spannschrauben (16a) lösbar miteinander verbunden sind und welche mit dem Kugelkopf (29) zur Festlegung der Neigung der Lochplatte (41) gegenüber dem Stützrohr (1) reib-, form- und / oder kraftschlüssig verbunden sind.

4. Leicht handhabbares Gestell nach mindestens einem der vorhergehenden Ansprüche, **dadurch gekennzeichnet, dass** die Grundplatte (3) mittels Abstandshaltern (15) und / oder Verbindungsvorrichtungen (16, 19) an das Tragelement (8) koppelbar ist, wobei die Abstandshalter (15) zur Einstellung der Beabstandung der Grundplatte (3) von dem Tragelement (8) vorgesehen sind, die Grundplatte (3) zur Kopplung mit dem Tragelement (8) mittels seitlich angeordneter Krallen (19) und Spannschrauben (16a) als Verbindungsvorrichtungen verbunden ist, welche Krallen mittels Scharniere (23) an der Grundplatte (3) beweglich gekoppelt sind.

5. Leicht handhabbares Gestell nach mindestens einem der vorhergehenden Ansprüche, **dadurch gekennzeichnet, dass** das Stützrohr (1), die Grundplatte (3), die Gelenkeinrichtung (27), die Verbindungsvorrichtung und / oder die Lochplatte (41) mit Metallen, Kunststoffen, glasfaserverstärkten Kunststoffen und / oder kohlenstofffaserverstärkten Kunststoffen hergestellt sind.

6. Leicht handhabbares Gestell nach mindestens einem der vorhergehenden Ansprüche, **dadurch gekennzeichnet, dass** die Dämmstoffhülse (7) mit der Manschette (9) auf einer Zusatzmanschette (200) liegt und mit ihrem äußeren Randbereich (9a) mit der Zusatzmanschette (200) wasserdicht verbunden ist, die Zusatzmanschette (200) von einer Glattblech-Manschette (31a) mit einem Abstand A beabstandet und mittels Langschrauben (13) als Verbindungsvorrichtungen mit der Glattblech-Manschette (31a) verbunden ist, die äußeren Randbereiche (200a) der Zusatzmanschette (200) zur wasserdichten Verbindung mit einer Dachabdichtungsschicht (11a) der Dachschicht des Dachs geeignet ist, die Glattblech-Manschette (31a) mittels Verbindungsvorrichtungen mit einer auf dem Tragelement ruhenden Einrichtung des Dachtragwerks des Dachs verbindbar ist, auf der Glattblech-Manschette (31a) eine Manschette-Dampfsperrfolie (21a) aufliegt, welche mit dem Stützrohr (1) wasserdicht verbunden ist und mit einer Dampfsperre (21) wasserdicht verbindbar ist.

7. Verfahren zur Bereitstellung eines leicht handhabbaren Gestells zur Kopplung von Dachaufbauten an Dachtragwerken von Dächern, vorzugsweise Flachdächern, mit welchem sich die Lage der Dachaufbauten gegenüber Dachschichten oder Dacheindeckungselementen verstellen und festlegen lässt, nach mindestens einem der vorhergehenden Ansprüche,
**dadurch gekennzeichnet, dass**
a. mittels zwei einander gekoppelter Lochsägen (5) mit ringförmigen Sägeblättern (5b) unterschiedlichen Durchmessers ein Durchbruch mit dem Durchmesser A aus einer eine Dämmstoffschicht (11) und einer Dachabdichtungsschicht (11a) umfassenden Dachschicht des Dachs zur Bereitstellung einer inneren Lochsägenfüllung (20a) und ein Durchbruch mit dem Durchmesser B, welcher größer als der Durchmesser A ist, aus der die Dämmstoffschicht (11) und die Dachabdichtungsschicht (11a) umfassenden Dachschicht des Dachs zur Bereitstellung einer äußeren Lochsägenfüllung (20) ausgefräst und diese entnommen werden,
b. anschließend mittels einer Lochsäge mit einem Sägeblatt (110) ein Durchbruch mit einem Durchmesser C, welcher größer als Durchmesser A und kleiner als Durchmesser B ist, aus der Dampfsperre (21) und einem Trapezblech (30) ausgefräst wird,
c. eine Grundplatte (3) mit dem Tragelement (8) des Dachs mit Hilfe von Schraubverbindungen als Verbindungsvorrichtungen (16) verbunden wird,
d. das eine Ende (1e) des Stützrohrs (1) mit der Grundplatte (3) mit Hilfe einer Verbindungseinrichtung (2) verbunden wird,
e. über das Stützrohr (1) eine Glattblech-Manschette (31 a) mit ihrer Öffnung geführt und die Glattblech-Manschette (31a) mit dem Trapezblech (30) mittels Verbindungsvorrichtungen (16) verbunden wird, wobei die Glattblech-Manschette (31a) einen Durchmesser D hat, der größer als der Durchmesser C ist,
f. über das Stützrohr (1) eine Manschette-Dampfsperrfolie (21a) mit ihrer Öffnung geführt wird, welche Manschette-Dampfsperrfolie (21 a) einen Durchmesser B hat, der gleich oder größer als der Durchmesser B der äußeren Lochsägenfüllung ist, welche mit ihrem äußeren Randbereich (21aa) mit der Dampfsperre (21) und mit ihrem inneren Randbereich (21bb) mit dem Stützrohr (1) wasserdicht und dauerhaft verbunden wird und
g. über das Stützrohr (1) die äußere Lochsägenfüllung (20) geführt und auf die Manschette-Dampfsperrfolie (21 a) gelegt wird.

8. Verfahren zur Bereitstellung eines leicht handhabbaren Gestells nach Anspruch 7, **dadurch gekennzeichnet, dass** in einem Verfahrensschritt
h. über das Stützrohr (1) eine Dämmstoffhülse (7) mit einer Manschette (9) geführt wird, wobei die Manschette (9) auf der Dachabdichtungsschicht (11a) zum Aufliegen gebracht und mit ihrem äußeren Randbereich (9a) mit der Dachabdichtungsschicht (11a) wasserdicht und dauerhaft verklebt oder verschweißt wird.

9. Verfahren zur Bereitstellung eines leicht handhabbaren Gestells nach Anspruch 8, **dadurch gekennzeichnet, dass** der Durchmesser E der Manschette (9) größer als der Durchmesser B der äußeren Lochsägenfüllung(20) ist.

10. Verfahren zur Bereitstellung eines leicht handhabbaren Gestells nach Anspruch 7, **dadurch gekennzeichnet, dass** in den Verfahrensschritten
i. über das Stützrohr (1) eine Zusatzmanschette (200) mit einem Außendurchmesser E, welcher kleiner als der Durchmesser E der Manschette (9) und größer als der Durchmesser C des Durchbruchs des Trapezbleches (30) ist, geführt wird, welche zum Aufliegen auf der Dachabdichtungsschicht (11a) und der Lochsägenfüllung (20) gelangt und mittels Verbindungsvorrichtungen (16) mit der Glattblech-Manschette (31a) verbunden wird, die äußeren Randbereiche (200a) des Zusatzbleches (200) wasserdicht und dauerhaft mit Dachabdichtungsschicht (11a) verklebt oder verschweißt wird, und
j. über das Stützrohr (1) eine Dämmstoffhülse (7) mit einer Manschette (9) geführt wird, wobei die Manschette (9) gegen die Zusatzmanschette (200) zum Aufliegen gebracht wird und mit ihrem äußeren Randbereich (9a) mit der Zusatzmanschette (200) wasserdicht und dauerhaft verklebt oder verschweißt wird.

11. Verfahren zur Bereitstellung eines leicht handhabbaren Gestells nach Anspruch 10, **dadurch gekennzeichnet, dass** die Zusatzmanschette (200) einen Außendurchmesser E hat, welcher größer als Durchmesser B der äußeren Lochsägenfüllung (20) ist.

12. Verfahren zur Bereitstellung eines leicht handhabbaren Gestells nach Anspruch 10 oder 11, **dadurch gekennzeichnet, dass** der Durchmesser E der Manschette (9) kleiner als der Durchmesser B der äußeren Lochsägenfüllung(20) und der Durchmesser der Zusatzmanschette ist.

13. Verfahren zur Bereitstellung eines leicht handhabbaren Gestells nach mindestens einem der Ansprüche 7 bis 11, **dadurch gekennzeichnet, dass** die Neigung der Lochplatte (41) zu dem Stützrohr (1) mittels einer Gelenkeinrichtung (27) eingestellt und festgehalten wird, als Gelenkeinrichtung ein Kugelkopf (29) und eine mit dem Kugelkopf (29) zusammenwirkende Kugelkopfhülse (42) verwendet wird.

14. Verfahren zur Bereitstellung eines leicht handhabbaren Gestells nach einem der Ansprüche 7 bis 13, **dadurch gekennzeichnet, dass** die Dämmstoffhülse (7) mit ihren Dichtlippen (100) gegen das Stützrohr (1) zum Anliegen gelangt,

15. Verfahren zur Bereitstellung eines leicht handhabbaren Gestells nach einem der Ansprüche 7 bis 14, **dadurch gekennzeichnet, dass** als Verbindungsvorrichtung eine Schraubenverbindung, eine Bolzenverbindung, Spannschraubenverbindung, eine Klammerverbindung, eine Krallverbindung, vorzugsweise mit formschlüssigen, kraft-, und / oder reibschlüssigen Sicherungen, Nietverbindung und / eine Klebverbindung, verwendet werden.
